Europäisches Patentamt

European Patent Office

Office européen des brevets

(19)

(11) EP 0 727 656 A1

## (12) EUROPEAN PATENT APPLICATION

(43) Date of publication:
21.08.1996 Bulletin 1996/34

(51) Int Cl.$^6$: G01N 17/00

(21) Application number: 96300999.8

(22) Date of filing: 14.02.1996

(84) Designated Contracting States:
FR GB

(30) Priority: 15.02.1995 JP 26907/95

(71) Applicant: HITACHI, LTD.
Chiyoda-ku, Tokyo 101 (JP)

(72) Inventors:
- Honda, Takashi
Hitachinaka-shi, Ibaraki 312 (JP)
- Hira, Yasuo
Hitachi-shi, Ibaraki 319-15 (JP)
- Arai, Yuuko
Higashibaraki-gun, Ibaraki 311-43 (JP)
- Yokosuka, Tsunenobu
Mito-shi, Ibaraki 310 (JP)
- Sukegawa, Masayuki
Kitaibaraki-shi, Ibaraki 319-15 (JP)

(74) Representative: Calderbank, Thomas Roger et al
MEWBURN ELLIS
York House
23 Kingsway
London WC2B 6HP (GB)

(54) **Corrosion estimating method for plant structural material and corrosion diagnostic system**

(57) In a plant dealing with an acidic solution, particularly in a spent nuclear fuel reprocessing plant, corrosion of a structural material contacting the acidic solution is estimated. A product of a corrosion rate in a boiling state under atmospheric pressure, a corrosion accelerating rate of a dissolved chemical species, a welding working effect correction value, a temperature correction value and an operating mode correction value is estimated as the corrosion rate of the plant to be diagnosed. A diagnostic system estimates a corrosion rate and a corrosion state using material information, operational information and medium information to output the estimated result.

FIG. 1

EP 0 727 656 A1

**Description**

The present invention relates to a method and an apparatus of estimating, predicting and diagnosing progress of corrosion and a method of suppressing corrosion in a structural material contacting a solution containing an acid in a plant dealing with the solution containing the acid, and more particularly to a method of estimating corrosion and a corrosion diagnostic system using the method suitable for a spent nuclear fuel reprocessing plant (hereinafter, referred to as "a reprocessing plant").

One of reprocessing methods of recovering uranium and plutonium from spent nuclear fuel known is the purex process in which spent nuclear fuel is dissolved in dilute nitric acid to form an acidic solution of nitric acid, and then uranium and plutonium are extracted from the acidic solution using tributyl phosphate-kerosene solution.

In a case of performing a reprocessing using the purex process, corrosion of structural materials becomes a problem since the structural material contacts the phosphite acid solution. Therefore, various kinds of high corrosion-resistant technologies have been employed in the reprocessing plant using the purex process. As to the high corrosion-resistant technologies, it is known that a corrosion resistant material such as zirconium, a very low carbon stainless steel or the like is used for the structural material, and a depressurized boiling method is employed to moderate the corrosion environment.

Since it is important for the managing plant operation to correctly understand damage of a structural material by corrosion, some of corrosion diagnoses are usually performed. The conventional corrosion diagnoses in a large plant can be roughly divided into ones preformed during operation and ones performed during suspension.

A method often employed is that a sample pieces made of an objective material are immersed into a medium during operation and periodically taken out to inspect the corrosion damage and the weight decrease due to corrosion. On the other hand, during suspension, a method of measuring thickness of the structure utilizing ultrasound, magnetism or the like, a method of understanding corrosion state by inspecting the inner surface of a component using a scope or the like, and a method of inspecting by disassembling a component are employed. These methods are described in, for example, "Corrosion Prevention Technology Handbook", page 841, edited by The Corrosion and Anti-corrosion Association (Nikkan Industry News Paper Co. (published in 1986)).

In addition to these, in a reprocessing plant, there is a method of measuring the thinning of thickness and the state of corrosion due to corrosion of the material utilizing ultrasound. For a reprocessing plant, there is a method where the state of inner surface of a component is inspected using a remote operated television monitor because of existence of radioactive nuclide and high radioactivity of the component. This method is described in, for example, Br. Corros. J. Vol.25, No.2, pp.103-104 (1990).

Although the method of immersing the test piece provides knowledge of corrosion state during the immersing period after immersing the test piece, it is impossible to understand how the corrosion changes when the operating state of the plant and the composition of the nitric acid solution change, and to predict the progressing state of the corrosion after that time. Further, it is difficult to understand the state of the whole plant since the measuring positions are limited.

On the other hand, the methods of performing corrosion inspections during suspension provide only knowledge of the corrosion state of a material at the time when the material is measured or inspected. Therefore, in each of the methods, it is impossible to diagnose the corrosion state of the whole plant for the time being to reflect the result to the operating method of the plant after that time.

The present invention has been developed to address this difficulty, and at its most general provides a corrosion estimating method for estimating corrosion related information such as rate of corrosion, an amount of corrosion, remaining life time of a structural material and a corrosion diagnostic system for a structural material in connection with the structural material contacting a solution containing an acid in a plant performing a process of the solution containing the acid, and more particularly in a spent nuclear fuel reprocessing plant, in consideration of change of the environmental condition in which the structural material is placed.

The present invention can be attained by providing a corrosion rate estimating method of a plant structural material for estimating progress of corrosion in a structural material in contact with a solution containing an acid in a plant dealing with the solution containing the acid, wherein the corrosion rate is estimated by multiplying a corrosion rate of the structural material contacting the acid solution in the boiling state under atmospheric pressure, a corrosion acceleration rate of a predetermined chemical species contained in the solution containing the acid, a predetermined welding work effect correction value, a temperature correction value and a predetermined operating mode correction value, together.

The corrosion rate estimating method is suitable for a case where the plant to be diagnosed is a spent nuclear fuel reprocessing plant, and the solution containing the acid is a nitric acid solution containing a solved spent nuclear fuel.

The present invention can be attained by providing a corrosion diagnostic system of a plant structural material for estimating progress of corrosion in a structural material in contact with a solution containing an acid in a plant dealing with the solution containing the acid, which comprises an input unit, an output unit and a processor.

The input unit comprising a means for receiving an input on a concentration of a chemical species contained in the solution containing the acid, a means for receiving an input on the operating status data, a means for receiving an input on the temperature data of the solution containing the acid and a means for receiving an input on the information in relation to the structural material.

The processor comprises a means for obtaining a corrosion rate of the structural material contacting the acid solution in the boiling state under atmospheric pressure from the concentration of a chemical species contained in the solution containing the acid, and further comprises a means for estimating a corrosion rate of the structural material contacting the acid solution in the boiling state under atmospheric pressure and a means for outputting at least one of the estimated corrosion rate and the information on progress of corrosion obtained by the corrosion rate to the output unit.

The means for estimating a corrosion rate estimates the corrosion rate of the structural material from the product of a corrosion rate of the structural material contacting the acid solution in the boiling state under atmospheric pressure, a correction value determined by the concentration of a predetermined chemical species contained in the solution containing the acid, a correction value determined by the operating status data, and a correction value determined by the temperature data. Therein, it is preferable that the predetermined chemical species is at least one of nitric acid, iron, ruthenium and nitric acid ion.

The processor estimates the progress of corrosion every predetermined period and may comprise a means for outputting an alarm to the output unit when the processor detects a progress of corrosion exceeding a predetermined level.

The corrosion diagnostic system according to the present invention suitable for a case where the plant is a spent nuclear fuel reprocessing plant and the acid is nitric acid. In this case, it is preferable that the input unit further comprises means for receiving an input on radiation dose and the processor further comprises means for estimating a corrosion rate of the structural material from the product of a corrosion rate of the structural material contacting the acid solution in the boiling state under atmospheric pressure, a correction value determined by the concentration of a predetermined chemical species contained in the solution containing the acid, a correction value determined by the operating status data, a correction value determined by the temperature data and a correction value determined by the radiation dose.

A corrosion rate of a structural material in a solution of an acid can be estimated by setting the corrosion rate of the material in the solution of the acid as a basis of corrosion rate and by multiplying correction values to the base rate. For example, letting A be the acid containing the solution containing an acid, the corrosion rate can be estimated the following equation (a).

(corrosion rate)=(corrosion rate in the aqueous solution of acid A in the boiling state under atmospheric pressure)

×(corrosion acceleration rate of a dissolved chemical species)

×(correction value of effects of heat treatment, working, welding, surface treatment)

×(correction value of temperature)

×(correction value of operating mode)     (a)

That is, the equation (a) is an estimating equation using the corrosion rate in the aqueous solution of the acid A in the boiling state under atmospheric pressure as the basis of calculating the corrosion rate. The corrosion rate in the aqueous solution of the acid A in the boiling state under atmospheric pressure can be obtained as a function of concentration of the acid A. When the acid A is nitric acid, the equation (a) is expressed by the following equation (a'). Description will be made below on a corrosion diagnosis of a structural material contacting a nitric acid solution in a spent nuclear fuel reprocessing plant having a process for dealing with an aqueous solution of nitric acid as an example of the plant dealing with a solution containing an acid.

(corrosion rate)=(corrosion rate in the aqueous solution of nitric acid in the boiling state under atmospheric pressure)

×(corrosion acceleration rate of a dissolved chemical species)

×(correction value of effects of heat treatment, working, welding, surface treatment)

×(correction value of temperature)

×(correction value of operating mode)     (a')

In the solution of nitric acid used in a reprocessing plant, the dissolved chemical species affecting corrosion are Fe (iron) ions, Ru (ruthenium) chemical compounds and $NO_{3-}$ (nitric acid) ions and so on. The relationship between the concentrations and the corrosion accelerating rate (K) has been determined by a specified equation in advance. This equation can be expressed by, for example, $K=1+\Sigma ai\cdot Xi$. Where ai is a constant for a dissolved chemical species (i), and Xi is a concentration of the dissolved chemical species (i). Since radioactive nuclear species are contained in the solution, the effect of radioactivity is quantified and included in the accelerating rate to deal with the radioactive nuclear species in the same way as the dissolved species. The accelerating rate differs depending on the process and the section in the plant. Therefore, a predetermined equation for each of the processes and the sections is used as each of the accelerating rates.

The effects of heat treatment, working, welding and surface treatment have been obtained in advance for individual partitioned sections based on pre-input material information (which is stored in a memory means 93). Various kinds of workings such as welding, cold working, hot working, re-solution heat treatment are generally performed in the process of manufacturing the components. Since such a working affects the corrosion, it is necessary to obtain each of the effects for each section.

Here, the corrosion rate in the aqueous solution of nitric acid in the boiling state under atmospheric pressure is set as the basis of calculating corrosion rate. Therefore, a temperature correction is required for estimating a corrosion rate under an actual environment.

The corrosion rate under non-heat transfer condition is calculated based on a temperature of the medium to which the material is exposed. Since the temperature dependence of the corrosion rate in a nitric acid solution is controlled by the Arrhenius rule, the conversion calculation is performed using the activation energy. Explaining this in more detail, the calculation can be expressed by the following equation.

$$CR_{ST}=CR_{BP}\cdot exp(-Q/R/T_{ST})/exp(-Q/R/T_{BP})$$

where $CR_{ST}$ is the corrosion rate at the temperature of the medium, $CR_{BP}$ is the corrosion rate in the boiling state under atmospheric pressure, $T_{ST}$ is the temperature (K) of the medium, $T_{BP}$ is the boiling temperature (K) under atmospheric pressure, Q is the activated energy and R is the gas constant.

For the corrosion rate under heat transfer condition, it is necessary to obtain the temperature correction for the heat transfer condition in advance. Since a surface temperature in a heat transfer portion is higher than the temperature of the medium, it is required to convert it to the corrosion rate under the surface temperature of the component. Further, it is necessary to add an additional correction based on the knowledge that the corrosion rate in a heat transfer surface is smaller than the corrosion rate corresponding the temperature of the heat transfer surface, which is described in, for example, RECOD'91, Vol.2, pp.558-563 (1991).

The correction of operation mode is a correction for change in the composition of solution over time such as the composition of the solution in a high level waste liquid condenser. In this case, if a corrosion is estimated by inserting the concentration of dissolved chemical species in the most condensed state, the corrosion is overestimated. Therefore, the corrosion is corrected by a pre-determined averaged value.

Explaining this in more detail, for example, in a case of taking a stainless steel as the objective material, the corrosion rate is expressed as follows.

(corrosion rate)=(corrosion rate in the aqueous solution of nitric acid in the boiling state under atmospheric pressure)

×(corrosion acceleration rate of a coexistent ions)

×(correction value of effects of welding working)

×(correction value of temperature)

×(correction value of operating mode)          (a'')

where the corrosion rate in the aqueous solution of nitric acid in the boiling state under atmospheric pressure can be obtained from the following equation (a-1).

(corrosion rate in a nitric acid solution)

$=Ka_1\times$(concentration of nitric acid)

$+Ka_2\times$(concentration of nitric acid)$^2$

$-Ka_3\times$(concentration of nitric acid)$^3$

$$+Ka_4 \times (\text{concentration of nitric acid})^4 \qquad (a\text{-}1)$$

The corrosion accelerating rate of coexistent ions, for example, for an acid recovering evaporator can be obtained by the following equation (a-2), and the correction accelerating rate of coexistent ions for a high level waste liquid condenser can be obtained by the following equation (a-3).

$$(\text{corrosion accelerating rate of coexistent ions})$$

$$=1+Kb_1 \times (\text{concentration of Ru})$$

$$+Kb_2 \times (\text{concentration of Fe}) \qquad (a\text{-}2)$$

$$(\text{corrosion accelerating rate of coexistent ions})$$

$$=1+Kc_1 \times (\text{concentration of Fe})$$

$$+Kc_2 \times (\text{concentration of nitric acid ions})$$

$$+Kc_3 \times (\text{radiation dose}) \qquad (a\text{-}3)$$

Let unit of nitric acid and nitric acid ion concentration be mol/l, unit of Ru and Fe be g/l, and unit of radiation dose be rad/hour. The values shown in Table 1 may be used for the individual constants.

Table 1

| Name of constant | Value |
|---|---|
| $Ka_1$ | $6 \times 10^{-4}$ |
| $Ka_2$ | $3 \times 10^{-4}$ |
| $Ka_3$ | $4 \times 10^{-5}$ |
| $Ka_4$ | $6 \times 10^{-6}$ |
| $Kb_1$ | 1.5 |
| $Kb_2$ | 1.0 |
| $Kc_1$ | 2.0 |
| $Kc_2$ | 0.5 |
| $Kc_3$ | $4 \times 10^{-6}$ |

The values shown in Table 2 may be used for the correction values for welding working effect correction and the operating mode correction.

Table 2

| | High Level Waste Liquid Condenser | Acid Recovering Evaporator | Low Level Waste Liquid Evaporator |
|---|---|---|---|
| Welding Work Effect Correction | 1.0 | 1.0 | 1.0 |
| Operating Mode Correction | 0.5 | 1.0 | 1.0 |

An amount of corrosion A is a present amount of corrosion in a structural material to be diagnosed, and can be obtained from the following equation.

$$(\text{amount of corrosion A})$$

$$=(\text{precedent amount of corrosion})$$

$$+\text{(corrosion rate)}\times$$

$$\text{(operating period of plant from the time the precedent amount of corrosion is obtained)} \qquad (b)$$

On the other hand, an amount of corrosion B at the time of the design life time is obtained from the following equation.

$$\text{(amount of corrosion B)} = \text{(amount of corrosion A)}$$

$$+\text{(corrosion rate)}\times$$

$$\text{(remaining life to the design life time)} \qquad (c)$$

where the "amount of corrosion A" is a value obtained form the equation (b).

Further, a remaining life can be obtained from the following equation.

$$\text{(remaining life)}$$

$$= \{\text{(designed corrosion allowance)} - \text{(amount of corrosion A)}\} /$$

$$\text{(corrosion rate)} \qquad (d)$$

In the above evaluation equations, the unit of "corrosion rate" is mm/year, the units of "amount of corrosion" and "corrosion allowance" are mm, and the units of "period" and "life time" are year.

Since, in the present invention, the information expressing corrosion state such as the corrosion rate using the estimation equation determined as described above, it is possible to understand the corrosion state of the structural materials speedy and appropriately by using the corrosion estimating method according to the present invention.

Since it is possible to easily understand a corrosion state by using the corrosion diagnostic system and to cope with the corrosion before the corrosion progresses up to a dangerous state, safety operation of a plant can be performed.

While a case where stainless steel is used for the structural material is described here, a concentration of plutonium as well as the concentrations of nitric acid, iron, ruthenium and nitric acid ion are used in a case of estimating a corrosion rate of a dissolving tank or the like.

In the drawings

FIG.1 is a functional block diagram of one embodiment of a corrosion diagnostic system in accordance with the present invention.

FIG.2 is an explanatory view showing an embodiment of a process display image.

FIG.3 is an explanatory view showing an embodiment of a component detailed display image.

FIG.4 is an explanatory view showing an embodiment of a map display image.

FIG.5 is an explanatory view showing an embodiment of a map display image.

FIG.6 is a diagram showing the construction of a spent nuclear fuel reprocessing plant to be diagnosed.

FIG.7 is a diagram showing the hardware construction of a processor.

FIG.8 is a flow chart showing the detailed process flow of step 106 in the inquiring response means in the embodiment 1.

FIG.9 is a flow chart showing the process flow in the plant monitoring means in the embodiment 1.

FIG.10 is a flow chart showing the process flow in the inquiring response means in the embodiment 1.

FIG.11 is an explanatory view showing an embodiment of an estimation equation display image.

FIG.12 is an explanatory diagram showing memory areas of a memory means 93.

FIG.13 is an explanatory view showing an embodiment of a numerical value display image.

FIG.14 is an explanatory view showing an embodiment of a numerical value display image for partitioning section instruction.

FIG.15 is an explanatory view showing an embodiment of a graph display image.

FIG.16 is a flow chart showing the process flow in the process monitoring means in embodiment 2.

FIG.17 is a flow chart showing the detailed process flow of step 106 in the inquiring response means in embodiment 2.

The present invention will be described in detail below, referring to the accompanying drawings.

[Embodiment 1]

## A. Object to be diagnosed

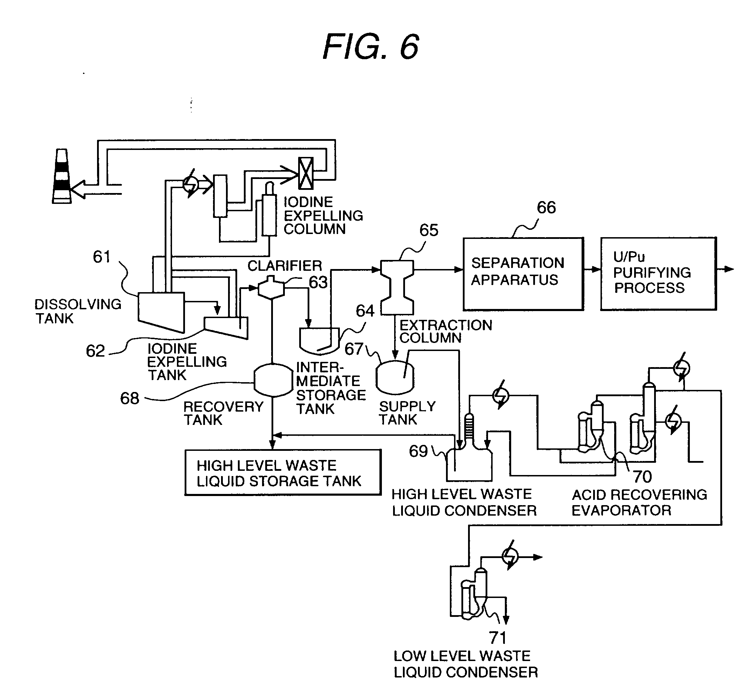

In this embodiment, structural materials in a nuclear fuel reprocessing plant are diagnosed. The nuclear fuel reprocessing plant in this embodiment comprises a dissolving tank 61, an iodine expelling tank 62, a clarifier 63, an intermediate storage tank 64, an extraction column 65, a separating apparatus 66, a recovery tank 68, a high level waste liquid condenser 69, an acid recovery evaporator 70, and a low level waste liquid evaporator 71, as shown in FIG.6.

The reprocessing of spent nuclear fuel is performed as follows. Initially, spent nuclear fuel is dissolved by nitric acid in the dissolving tank 61. By doing so, a nitric acid solution of spent nuclear fuel is obtained. After removing iodine out of the solution in the iodine expelling tank 62, the solution is clarified in the clarifier 63. The clarified solution is supplied to the extraction column 65 through the intermediate storage tank 64. Here, uranium and plutonium are extracted by an organic solvent and transferred to the separating apparatus 66. Then the uranium and the plutonium are recovered through a uranium/plutonium purification process. On the other hand, the nitric acid solution is introduced from a supplying tank 67 to the high level waste liquid condenser 69 to be condensed, and the high level waste liquid is transferred to a storage tank. On the other hand, the nitric acid vapor is transferred to the acid recovering evaporator 70 to be distilled, and the recovered nitric acid is reused. The remaining solution is condensed again by the low level waste liquid evaporator 71. The insoluble remainder collected by the clarifier 63 is discharged to the recovery tank 68 and transferred to a high level waste liquid storage tank.

Among the components, since the dissolving tank 61, the iodine expelling tank 62, the clarifier 63, the intermediate storage tank 64, the extraction column 65, the supplying tank 67, the high level waste liquid condenser 69, the acid recovering evaporator 70 and the low level waste liquid evaporator 71 treat with solutions of solvents (hereinafter referred to as "medium") which contain nitric acid, the structural materials contacting the medium are corroded by the nitric acid. In the embodiment, the corrosion diagnosis is performed for the components which directly contact the nitric acid.

## B. Construction of the corrosion diagnostic system

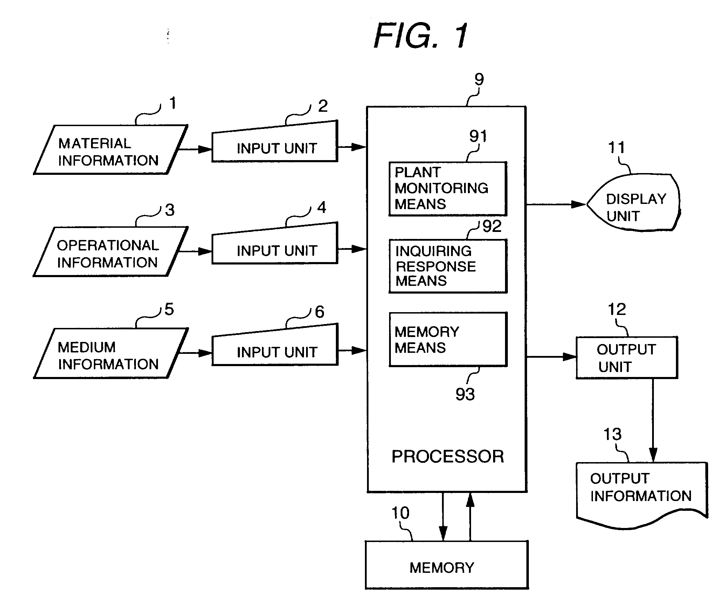

FIG.1 is a functional block diagram of one embodiment of a corrosion diagnostic system of the embodiment. The corrosion diagnostic system of the embodiment comprises a material information input unit 2, an operational information input unit 4, a medium information input unit 6, a processor 9, an external memory 10, an image display unit 11 and a print output unit 12.

The material information input unit 2 is an input unit for receiving material information 1 and informing the processor 9 of it, and the operational information input unit 4 is an input unit for receiving operational information 3 and informing the processor 9 of it, and the medium information input unit 6 is an input unit for receiving medium information 5 and informing the processor 9 of it.

The material information 1 in the embodiment is composed of a kind of structural material to be diagnosed, a composition of the structural material, a heat treatment condition, a method of working, presence or absence of welding portion and a method of the welding, a history of surface treatment, presence or absence of maintenance and a method of the maintenance. The operational information 3 is composed of an operating period, a suspending period, a storage period and information indicating which state a component is in at present time for each of components to be diagnosed. The medium information 5 is composed of a temperature of a medium contacting each of components, each of concentrations of chemical species (nitric acid, Fe, Ru, $NO_3^-$ and so on), and information expressing a radiation dose.

In the embodiment, the material information input unit 2 and the operational information input unit 4 have a means for receiving information inputs by displaying preset menu information to receive any selections among information contained in the menu information. The medium information input unit 6 has a means for receiving information from a concentration sensor for each of chemical species (not shown), a radiation dose sensor (not shown) and a temperature sensor (not shown) provided each of the components. While the medium information is directly obtained through the sensors (on-line measuring equipments), the medium information may be input into the medium information input unit 6 by sampling the solution in the component and measuring the concentration in the sample. In this case, as for measuring of the concentration, analyzing method such as liquid chromatography, atomic absorption spectro-photometry, ion chromatography, high frequency induction coupling plasma emission spectral analysis or the like can be employed.

The processor 9 received the input information 1, 3, 5 through the input units 2, 4, 6 stores the information in the external memory and calculates the corrosion rate, the amount of corrosion and the remaining life time of the structural material to be diagnosed through calculation process to output the result to the display unit 11 and/or the print output unit 12.

In the embodiment, the display unit 11 comprises an image display unit for displaying an image. In the embodiment, the display screen of the image display unit has a touch sensor to detect a contact to the display screen. When the display unit 11 detects a contact to the display screen, the display unit 11 understands that information predetermined in the touched area is input to receive the information and informs the processor 9 of the information. While the display unit 11 is also used as an input unit in the embodiment, an input unit such as a key board, a mouse or the like may be provided in addition to the output unit such as display unit 11. The print output unit 12 in the embodiment is a unit for outputting the calculated result as a print output of the output information 13 corresponding to an instruction of the processor 9.

C. Processing contents of the processor 9

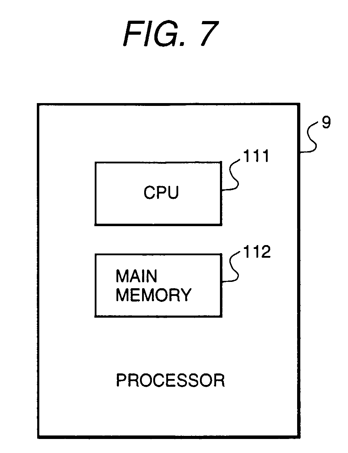

The processor 9 is an information processor having a central processing unit (CPU) 111 and a main memory 112, as shown in FIG.7. When expressing the processor by functional blocks, the processor 9 is composed of a plant monitoring means 91 for continuously monitoring the plant and output a signal to the display unit 11 when an abnormality is detected, an inquiring response means 92 for responding to an inquiry received through the display unit 11 and a memory means 93, as shown in FIG.1. The plant monitoring means 91 and the inquiring response means 92 are realized by the CPU 111 executing an instruction storing in the main memory unit 112 in advance. The memory means 93 is a memory area held on the main memory unit 112.

(1) Information stored in the memory means 93

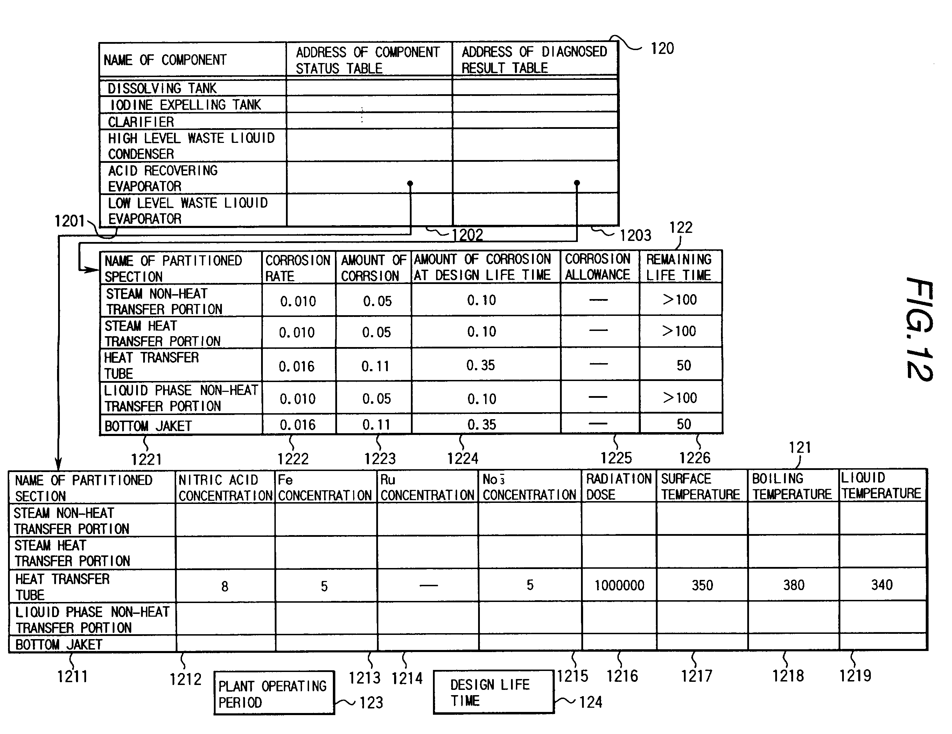

The memory means 93 has a storing area 123 for operating period of the plant to be diagnosed, a storing area 124 for design life time of the plant, a component construction table 120 of a list of components to be diagnosed composing the plant, a component status table 121 and a diagnostic result table 122 for each component, a history storing area (not shown), a calculation equation storing area (not shown), storing areas for the material information 1 and the operation information 3. FIG.12 illustrates a component status table 121 and a diagnostic result table 122 corresponding to a high level waste liquid condenser as an example.

The component construction table 120 has a component name storing area 1201 for storing the names of components, a component status table address storing area 1202 for storing the addresses of the component status table 121 for indicating the statuses of the components, a diagnosed result table address storing area 1203 for storing the addresses of the diagnosed result table 122 for storing the diagnosed results of the components.

The component status table 121 is a table storing information on each of partitioned sections composing a corresponding among the components to be diagnosed. Here, the partitioned section means a region of each component partitioned according to a predetermined manner and a minimum unit of diagnosis.

The component status table 121 has an arrangement structure composed of a storing area 1211 for partitioned section name, a storing area 1212 for nitric acid concentration, a storing area 1213 for iron concentration, a storing area 1214 for ruthenium concentration, a storing area 1215 for nitric acid ion concentration in the medium at the section, a storing area 1216 for radiation dose, a storing area 1217 for surface temperature, a storing area 1218 for boiling temperature under atmospheric pressure and a storing area 1219 for liquid temperature, in each of the partitioned sections, as shown in FIG.12.

For example, for the high level waste liquid condenser of the embodiment, there are defined five partitioned sections of a steam non-heat-transfer section, a steam heat-transfer section, a heat transfer tube section, a liquid phase non-heat-transfer section and a bottom portion jacket section. Therein, the component status table 121 for the high level waste liquid condenser has a 5 rows and 9 column arrangement which is composed of rows of the individual five partitioned sections, and columns of the storing area 1211 for partitioned section name, the storing area 1212 for nitric acid concentration, the storing area 1213 for iron concentration, the storing area 1214 for ruthenium concentration, the storing area 1215 for nitric acid ion concentration in the medium in each of the sections, the storing area 1216 for radiation dose, the storing area 1217 for surface temperature, the storing area 1218 for boiling temperature under atmospheric pressure and the storing area 1219 for liquid temperature, in each of the rows, as shown in FIG.12.

The diagnostic result table 122 is a table storing diagnostic information obtained by calculation using the information on each of partitioned sections composing a corresponding among the components to be diagnosed. The diagnostic result table 122 has an arrangement structure composed of a name storing area 1221 for partitioned section, a storing area 1222 for corrosion rate, a storing area 1223 for an amount of corrosion, a storing area 1224 for an amount of corrosion (extrapolated value) at the time of the design life time, a storing area 1225 for thickness of corrosion allowance and a storing area 1226 for remaining life time, for each of the partitioned sections, as shown in FIG.12. A thickness of corrosion allowance pre-determined by a design is stored in the storing area 1225 for thickness of corrosion allowance.

Design life times for all the partitioned sections of the components to be diagnosed of the plant to be diagnosed are stored in the storing area 124 for design life time. If a value of design life time is input through the input means, the processor 9 changes the value of design life time by storing the input new value in the storing area 124 for design life time.

Total operating time up to the present time for each component is stored in the storing area 123 for plant operating period. The processor 9 can receive information indicating whether each of the components is in operating state or not as the operation information 3 through the input unit 4. Therefore, the processor 9 updates the content in the storing area 123 for plant operating period every certain period (every one hour in the embodiment) by counting only the operating time for each component based on the operating information 3.

The history storing area is a memory area for storing the history of contents of the storing area 123 for operating period of the plant to be diagnosed, the component construction table 120 of list of the components to be diagnosed composing the plant, the component status table 121 and the diagnostic result table 122 for each of the components. In the embodiment, the processor 9 copies the contents of these storing areas 120 to 123 at the time being into the history storing area every one year after starting of the plant operation. The history storing area composed of a copied area having the same data construction as the storing areas 120 to 123 and a list of addresses for the copied area which is a correspondence table between the address and the operating time at the time of copying.

The calculation equation memory area is a memory area for storing the calculation equations (evaluating equations) for estimating the corrosion status, and stores a preset amount of corrosion, a corrosion rate, an extrapolated value of the amount of corrosion for each of the partitioned sections as the initial values.

(2) Processing of the plant monitoring means 91

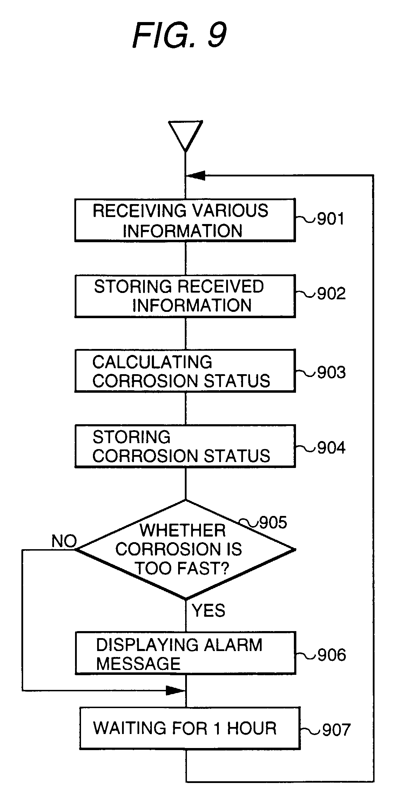

FIG.9 shows the process flow in the plant monitoring means 91.

a. Receiving of the medium information

The plant monitoring means 91 inquires the material information 1, the operating information 3 and the medium information 5 of the input units 2, 4, 6 (step 901) every certain period (every one hour in the embodiment) (step 907). The input units 2, 4, 6 receiving the inquiries notify the plant monitoring means 91 of the material information 1, the operating information 3 and the medium information 5. For example, the medium information input unit 6 receiving the inquiry notifies the plant monitoring means 91 of the medium information 5 in all the partitioned sections of all the components composing the plant to be diagnosed detected by the chemical species (nitric acid, Fe, Ru, $NO_3$.) sensors, the radiation dose sensor and the temperature (liquid temperature and absolute temperature of a surface) sensors (not shown) provided in each of the partitioned sections. As for the material information 1, the initial values at designing are stored in the memory means 93, and the material information input unit 2 notifies the plant monitoring means of a value to be changed from only when the corresponding initial value is changed.

When the plant monitoring means 91 receives a notice of changing a value of the material information, the plant monitoring means 91 changes the data of the material information 1 stored in the memory means 93 based on the notice. The plant monitoring means 91 also stores the operating information 3 in the memory means 93. Further, the plant monitoring means 91 stores the medium information 5 in each of the areas 1212 to 1216, 1219 of the component status table 121 of the individual components according to the kinds. Furthermore, the plant monitoring means 91 calculates a boiling temperature under atmospheric pressure from a nitric acid concentration and stores the result to the boiling temperature storing area 1218 (step 902). Therein, the boiling temperature under atmospheric pressure is a value determined corresponding to a nitric acid concentration.

b. Calculation of a corrosion status

Next, the plant monitoring means 91 calculates information in regard to corrosion status (an amount of corrosion, a corrosion rate, an extrapolated value of amount of corrosion at the design life time, a remaining life time) for each of the partitioned sections based on the information stored in the component status table 121 using the evaluation equations stored in the calculation equation memory area (step 903), and stores the obtained result into the corresponding row to the partitioned section of the storing areas 1222 to 1226 of the diagnostic result table 122 corresponding to the component (step 904).

The evaluation equations of information in regard to corrosion status will be described below. The information in regard to corrosion status can be obtained based on the evaluation equations pre-determined for each of the materials composing the partitioned sections. An example will be described here.

Firstly, a method of obtaining a corrosion rate will be described. A corrosion rate can be estimated, for example, by the following equation (a").

(corrosion rate)

=(corrosion rate in the aqueous solution of nitric acid in the boiling state under atmospheric pressure)

×(corrosion acceleration rate of a coexistent ions)

×(correction value of effects of welding working)

×(correction value of temperature)

×(correction value of operating mode)  (a'')

where the corrosion rate in the aqueous solution of nitric acid in the boiling state under atmospheric pressure can be obtained from the following equation (a-1).

(corrosion rate in a nitric acid solution)

$=Ka_1 \times$(concentration of nitric acid)

$+Ka_2 \times$(concentration of nitric acid)$^2$

$-Ka_3 \times$(concentration of nitric acid)$^3$

$+Ka_4 \times$(concentration of nitric acid)$^4$  (a-1)

The corrosion accelerating rate of coexistent ions, for example, for an acid recovering evaporator can be obtained by the following equation (a-2), and the correction accelerating rate of coexistent ions for a high level waste liquid condenser can be obtained by the following equation (a-3).

(corrosion accelerating rate of coexistent ions)

$=1+Kb_1 \times$(concentration of Ru)

$+Kb_2 \times$(concentration of Fe)  (a-2)

(corrosion accelerating rate of coexistent ions)

$=1+Kc_1 \times$(concentration of Fe)

$+Kc_2 \times$(concentration of nitric acid ions)

$+Kc_3 \times$(radiation dose)  (a-3)

Let unit of nitric acid and nitric acid ion concentration be mol/l, unit of Ru and Fe be g/l, and unit of radiation dose be rad/hour. The values shown in Table 1 may be used for the individual constants.

Table 1

| Name of constant | Value |
| --- | --- |
| $Ka_1$ | $6 \times 10^{-4}$ |
| $Ka_2$ | $3 \times 10^{-4}$ |
| $Ka_3$ | $4 \times 10^{-5}$ |
| $Ka_4$ | $6 \times 10^{-6}$ |
| $Kb_1$ | 1.5 |
| $Kb_2$ | 1.0 |
| $Kc_1$ | 2.0 |
| $Kc_2$ | 0.5 |
| $Kc_3$ | $4 \times 10^{-6}$ |

The values shown in Table 2 may be used for the correction values for welding working effect correction and the operating mode correction.

Table 2

|  | High Level Waste Liquid Condenser | Acid Recovering Evaporator | Low Level Waste Liquid Evaporator |
|---|---|---|---|
| Welding Work Effect Correction | 1.0 | 1.0 | 1.0 |
| Operating Mode Correction | 0.5 | 1.0 | 1.0 |

An amount of corrosion is a present amount of corrosion in a structural material to be diagnosed, and can be obtained from the following equation.

$$\text{(amount of corrosion)}$$

$$=\text{(precedent amount of corrosion)}$$

$$+\text{(corrosion rate)}\times$$

$$\text{(operating period of plant from the time the precedent amount of corrosion is obtained)} \qquad (b)$$

The words "precedent amount of corrosion" means a value stored in the storing area 1223 for amount of corrosion at the time when the calculation of the amount of corrosion is executed. In the embodiment, the "operating period of plant from the time the precedent amount of corrosion is obtained" is normally one hour since this calculation is executed every one hour. The time is always counted by a clock counting the time only during plant operation.

On the other hand, an amount of corrosion at the time of the design life time is obtained from the following equation.

$$\text{(amount of corrosion)}=\text{(amount of corrosion)}$$

$$+\text{(corrosion rate)}\times$$

$$\text{(remaining life to the design life time)} \qquad (c)$$

where the "amount of corrosion" is a value obtained form the equation (b). The "remaining life to the design life time" can be obtained by subtracting a value stored in the storing area 123 for plant operating period from a value stored in the storing area 124 for design life time.

Further, a remaining life can be obtained from the following equation.

$$\text{(remaining life)}$$

$$=\{\text{(designed corrosion allowance)}-\text{(present amount of corrosion)}\}/\text{(corrosion rate)} \qquad (d)$$

The value "designed corrosion allowance" is a value stored in the storing area 1225, and the value "present amount of corrosion" is a value calculated by the equation (b), and the value "corrosion rate" is a value calculated by the equation (a).

In the above evaluation equations, the unit of "corrosion rate" is mm/year, the units of "amount of corrosion" and "corrosion allowance" are mm, and the units of "period" and "life time" are year.

c. Alarm processing

Then the plant monitoring means 91 generate an alarm when the plant monitoring means detects a danger based on the corrosion status obtained in such a manner.

The plant monitoring means 91 judges where the amount of corrosion at the design life time is above the corrosion allowance or not for each of all the rows in all the diagnosed result tables 122 having the memory means 93 (step 905). If not, the plant monitoring means 91 allows the processing to proceed to step 907 without alarm since the corrosion rate is within the designed range, and allows the processing to return to step 901 after one hour waiting. If the amount of corrosion at the design life time is above the corrosion allowance, the plant monitoring means 91 displays an alarm message on the display unit 11 since the corrosion rate is too fast, and allows the processing to proceed to step 907.

The alarm message is displayed by a window type on the display screen of the display unit 11. That is, the plant monitoring means 91, which judges in step 905 that- the corrosion rate is too fast, displays a rectangular area on the display screen of the display unit 11 in superposing over an image having been displayed, and displays all the names of components and all the partitioned sections to be judged the corrosion rates are too fast and their corrosion rates, their amounts of corrosion, their amounts of corrosion at the design life time, their corrosion allowances and their remaining life times in the rectangular area. By doing so, a danger can be found earlier and can be noticed to a user.

The alarm message displayed in step 906 is continued to be displayed until an instruction for resetting the display is input through the display unit 11. When the processor 9 receives the instruction to reset the display, the processor 9 deletes the window of the alarm message out of the display screen.

(3) Processing of the inquiring response means 92

a. Process flow

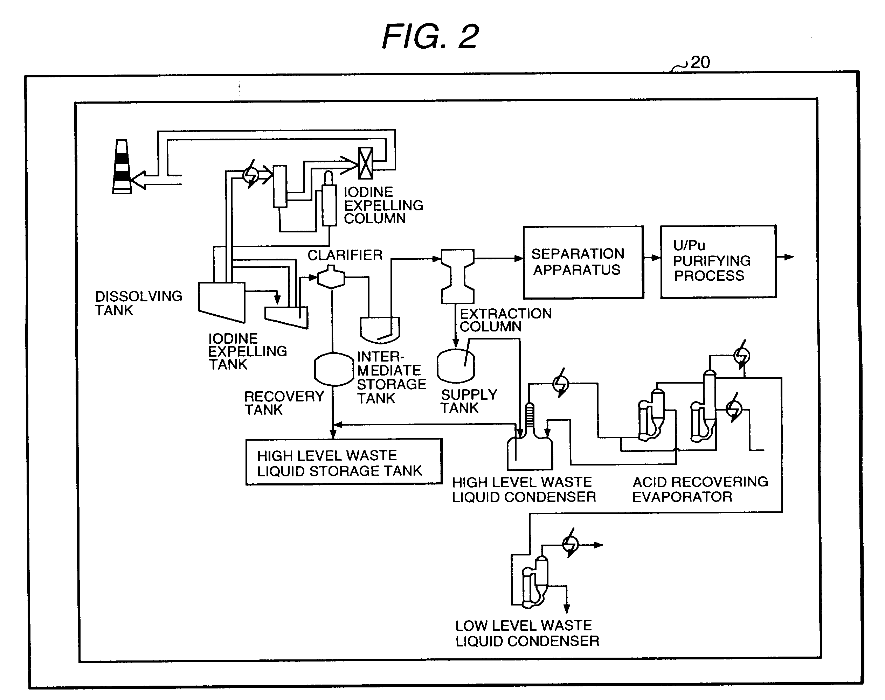

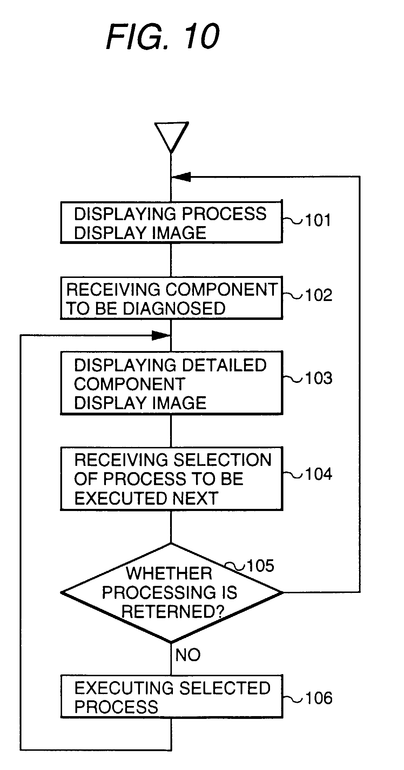

FIG.10 shows the process flow in the inquiring response means 92. Initially, the inquiring response means 92 displays a diagram showing the process of a whole plant shown in FIG.2 on the display screen 20 of the display unit 11 (step 101), and receives inputs of objective components (apparatuses) to be diagnosed through the display unit 11 (step 102). The input of an objective component can be performed by detecting a touch to an area displaying the component. Hereinafter, the image displaying the diagram of process is referred to as a process display image.

As the inquiring response means 92 receives the input of the objective component to be diagnosed, the inquiring response means 92 displays a view showing the details of the input objective component to be diagnosed on the display screen 20 of the display unit 11 (step 103), and next receives selection of process to be executed (step 104), and then executes displaying corresponding to the instruction (step 105). The image showing the details of the objective component to be diagnosed is referred to as a detailed component display image.

The detailed component display image comprises six kinds of selection area of a selecting area 203 for selecting kind of information to be displayed, a selecting area 204 for selecting format of display, a selecting area 205 for instructing to display the evaluation equations, a selecting area 207 for selecting partitioned section to be displayed, a selecting area 206 for selecting a display instruction of the process display image, a selecting area 208 for selecting corrosion calculating instruction.

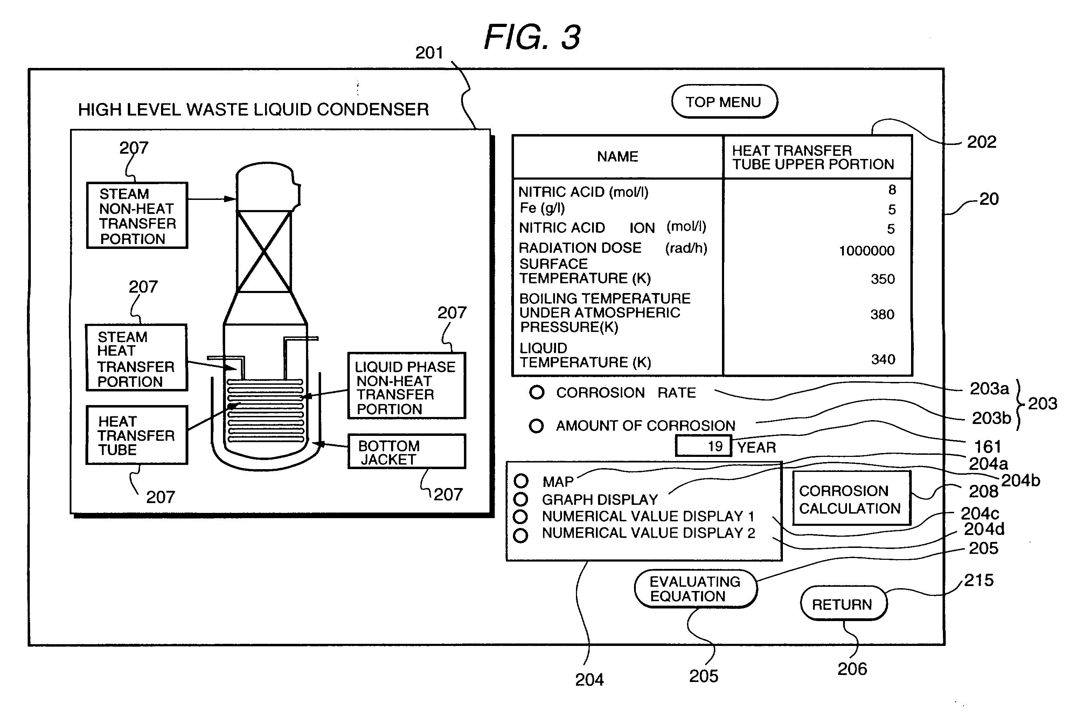

As shown in FIG.3, the selecting area 203 for selecting kind of information to be displayed has an instruction area 203a for displaying "corrosion rate" and an instruction area 203b for displaying "amount of corrosion". The selecting area 204 for selecting display format has a map display instruction area 204a, a graph display instruction area 204b, a first numerical value display instruction area 204c, and a second numerical value display instruction area 204d. The selecting area 207 for selecting partitioned section is a rectangular area displaying partitioned section names in the area illustrating the view of component on the display image 20 (shown as an area 201 in FIG.3).

Each of these selecting areas is defined corresponding to the content displayed in each of the areas. When the display unit 11 detects a touch to the selecting area, the display unit 11 judges that the content defined in the area is selected and notifies the inquiring response means 92 of the processor 9 of the content.

The inquiring response means 92 received the selection of processing to be executed next returns the processing to step 101 if the received selection is the display instruction of process display image (step 105). If the inquiring response means 92 receives a selection other than the display instruction of process display image, the inquiring response means 92 executes the process corresponding to the selection (step 106) and returns the processing to step 103.

b. Process of step 106

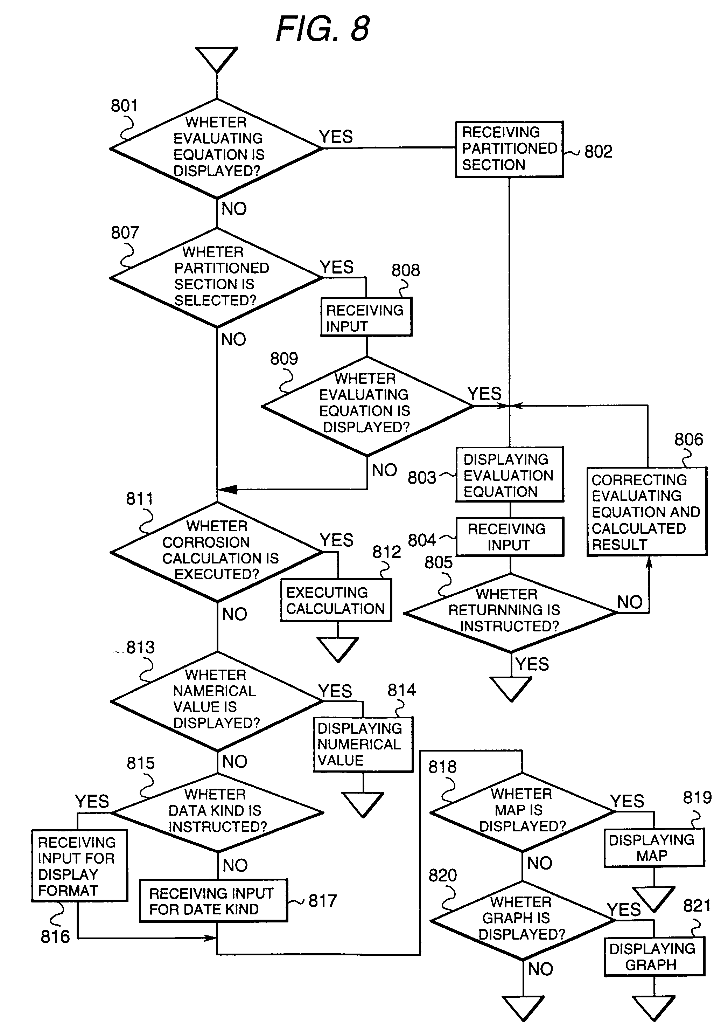

Among the selections received in step 104, the processes executed in step 106 are five kinds, that is, kind of information to be displayed (selecting area 203), format of display (selecting area 204), instruction of displaying evaluation equations (selection 205), partitioned section to be displayed (selecting area 207) and corrosion calculation instruction (step 208). when the inquiring response means 92 receives these selections in step 106, the inquiring response means 92 executes a process corresponding to a combination of the received selections. FIG.8 shows the process flow of information display of step 106.

b-1. Display and correction of evaluation equations

In step 106, if the selection received in step 104 is a display instruction of the evaluation equations (step 801), the inquiring response means 92 receives the selection of partitioned section (step 802) to let the processing proceed to step 803.

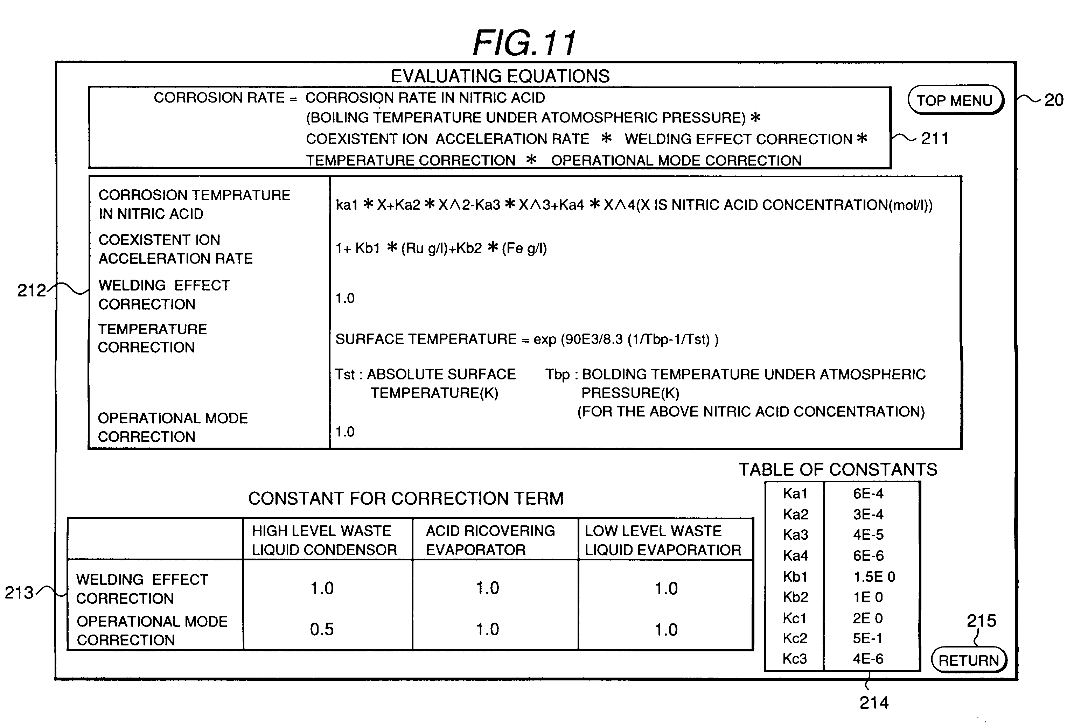

In step 803, the inquiring response means 92 displays the instructed evaluation equations on the display screen 20. FIG.11 shows an example of this display image. The display image shown in FIG.11 is an evaluation equation display image for a case where the high level waste liquid condenser 97 is selected in step 102 and the acid recovering apparatus 98 is selected as the partitioned section in step 104 or step 802.

As shown in FIG.11, the evaluation equation display image has an area 211 for displaying the evaluation equation of corrosion rate, an area 212 for displaying the calculating method of each variable used in the evaluation equation, an area 213 for displaying the table of each constant for correction term used in the evaluation equation, and an area 214 for displaying a list of individual constants used in the evaluation equations.

The inquiring response means 92 receives inputs on presence and absence of change, the portion of change and the content of change in the displayed evaluation equations through the display unit 11 and the input unit 2 (step 804). In more detail, the inquiring response means 92 recognizes the portion to be changed by detecting a touching position on the display screen 20 of the input unit 11 and receives the content to be changed through the keyboard. In the evaluation equation display image there is provided the selecting area 215 for instructing to display the detailed component display image. When a touch to this selecting area is detected, an instruction to return the image to the original image may be received in step 804.

If the instruction received in step 804 is the instruction for displaying the detailed component display image, the inquiring response means 92 ends the step 106 as it is, and returns the processing to step 103 (step 805). If the instruction is other than the instruction for displaying the detailed component display image, that is, the instruction for changing the evaluation equation, the inquiring response means 92 changes the evaluation equation stored in the evaluation equation storing area of the memory means 93 as instructed, and executes calculation on a corrosion rate, an amount of corrosion, an amount of corrosion at the design life time and a remaining life time for a selected partitioned section using the evaluation equations after being changed, and stores the result in each of the areas 1222 to 1224, 1226 of the diagnosed result table 122, and then returns the processing to step 803.

b-2. Specifying the partitioned section

If the selection received in step 104 is neither an instruction for displaying the evaluation equations nor an instruction for displaying a partitioned section (step 807), the inquiring response means 92 lets the processing proceed to step 811. If the selection received in step 104 is an instruction for displaying a partitioned section (step 807), the inquiring response means 92 again receives a selection of content to be displayed (step 808), and lets the processing proceed to the aforementioned step 803 if the instruction for displaying the evaluation equation is instructed. If the instruction for displaying the evaluation equation is not instructed, the processing proceeds to step 811 (step 809).

In a case where a preset section (special section) is specified as an objective partitioned section to be diagnosed, the processor 9 may display text information regarding the special section pre-stored in the memory unit 10 on the window in the display screen 20 (a rectangular area displayed in overlapping on an image having been displayed on the display screen).

b-3. Calculation of the amount of corrosion

If the selection received in step 104 or step 808 is an instruction for calculation of corrosion (step 811), the inquiring response means 92 again executes calculations on a corrosion rate, an amount of corrosion, an amount of corrosion at the design life time and a remaining life time, and stores the result in each of the areas 1222 to 1224, 1226 of the diagnosed result table 122 (step 812) to complete the processing in step 106, and then returns the processing to step 103.

If a partitioned section is specified in step 104, the calculation of corrosion is performed only on the specified partitioned section. If not, the calculation of corrosion is performed on all the partitioned sections composing a component selected in step 102. The process of the corrosion calculation in step 812 is the same process as the calculating process of the evaluating equations in step 903 in the process of the plant monitoring means 91.

b-4. Numerical value display

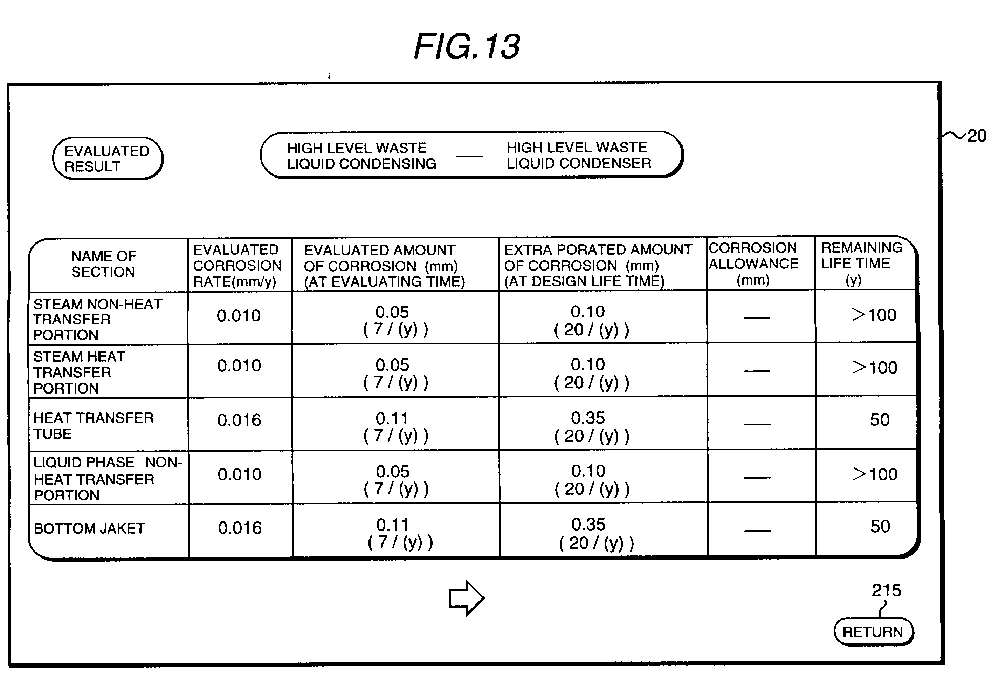

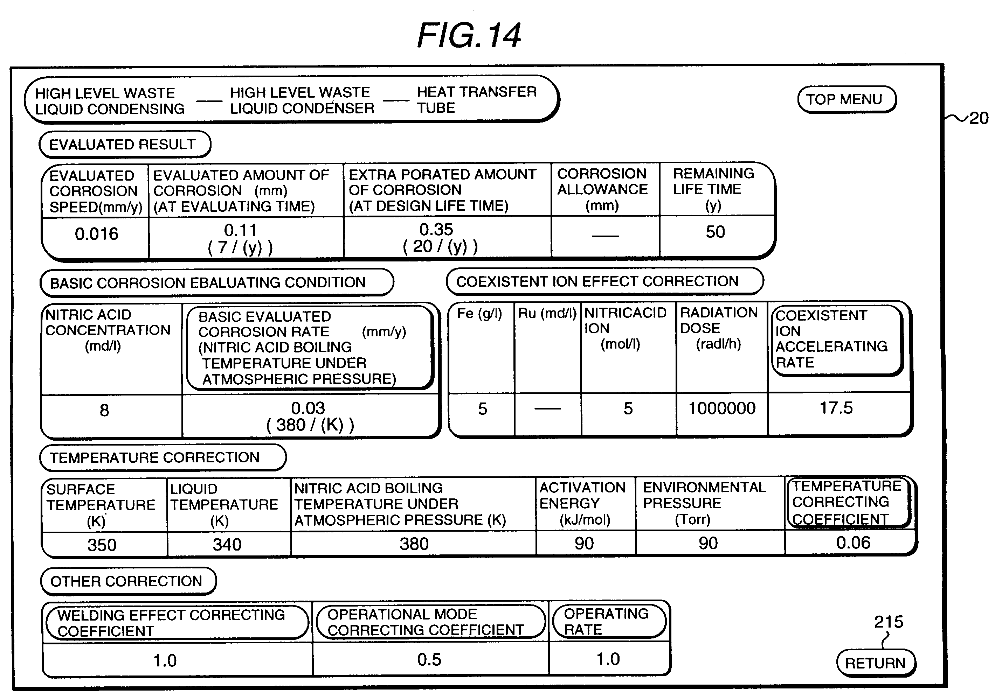

If the selection received in step 104 or step 808 is an instruction for displaying numerical values (step 813), the inquiring response means 92 displays information in regard to selected components on the display screen 20 (step 814). The display format at this time is pre-determined according to the display format 1 (selecting area 204c) and the display format 2 (selecting area 204d). If a partitioned section is selected in step 104, the inquiring response means 92 displays the numerical values of only the selected sections. FIG.13 and FIG.14 show examples of images displayed in step 814.

FIG.13 shows an example of a numerical value display image in a case where the high level waste liquid condenser 97 is selected in step 102, and the instruction for the numerical value display is selected in step 104, that is, the partitioned section is not selected. As shown in FIG.13, in the embodiment of the numerical value display image in a case where the partitioned section is not selected, the data such as corrosion rate and so on stored in the diagnosed result table 122 are displayed in a table format for each of the partitioned sections composing the selected components.

FIG.14 shows an example of a numerical value display image in a case where the high level waste liquid condenser 97 is selected in step 102, and the instruction for the numerical value display is selected in step 808. As shown in FIG. 14, in the embodiment of the numerical value display image in a case where the partitioned section is selected, the data such as corrosion rate and so on stored in the diagnosed result table 122 and the correction values for obtaining the data are displayed in a table format for the selected partitioned sections.

Each of these numerical value display images has a selecting area 215 for instructing displaying the detailed component display image. The inquiring response means 92 displays the numerical value display image until a touch to the selecting area 215 is detected. When the touch to the selecting area is detected, the inquiring response means 92 completes the processing in step 106 and returns the processing to step 103.

b-5. Specifying the kind of data to be displayed

If the instruction received in step 104 is an instruction of kind of data to be displayed (step 815), the inquiring response means 92 receives the selection of display format (selecting area 204) (step 816), and let the processing proceed to step 818. If the instruction received in step 104 is not an instruction of kind of data to be displayed (step 815), the inquiring response means 92 receives the selection of display format (selecting area 203) (step 817), and let the processing proceed to step 818.

b-6. Display of a map

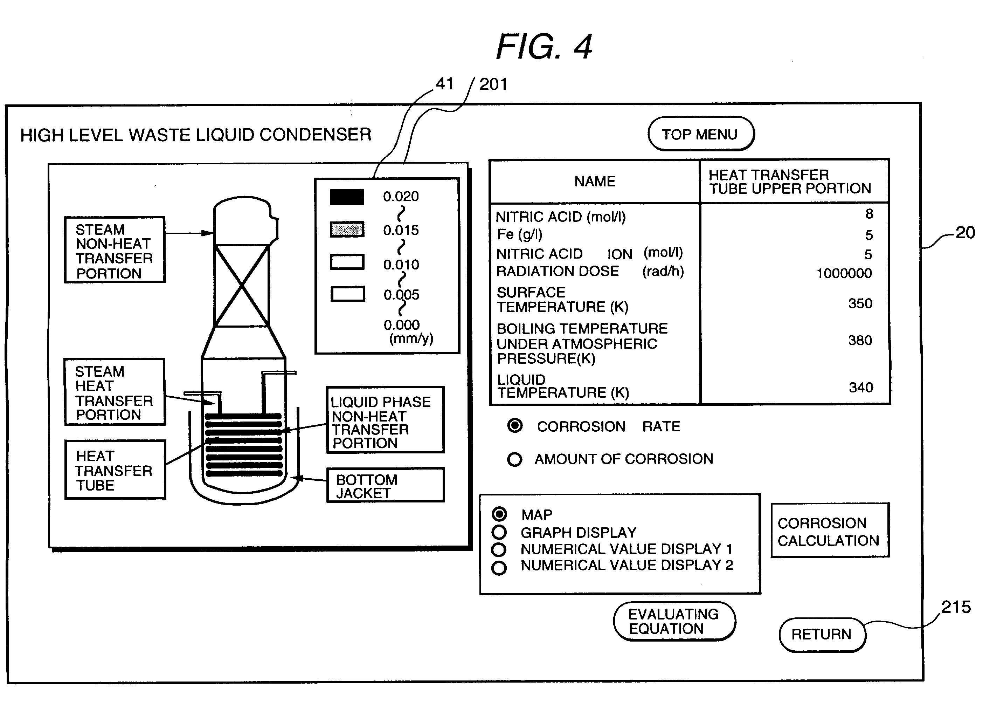

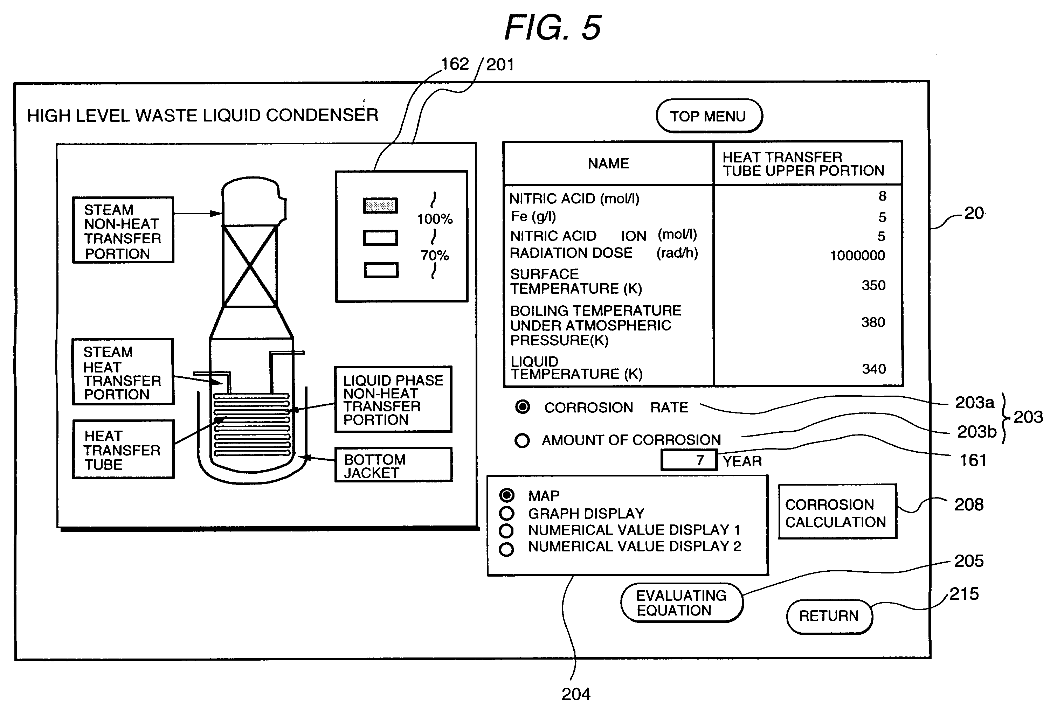

In step 818, the inquiring response means 92 inspects whether the selection received in step 104, step 808 or step 816 is an instruction for displaying a map. If the selection is an instruction for displaying a map, the inquiring response means 92 illustrates the information in regard to a selected component or a partitioned section when the partitioned section is selected on the area 201 of the display screen 20 by coloring the picture of the component (step 819). FIG.4 and FIG.5 show examples of images displayed in step 819.

FIG.4 shows an example of a numerical value display image in a case where the high level waste liquid condenser 97 is selected in step 102, and the map display is selected in step 104 or step 816, and the data kind is selected in step 104 or step 817, that is, the partitioned section is not selected, and the corrosion rate is selected as the data kind. As shown in FIG.4, in the embodiment of the map display image in a case where the partitioned section is not selected, each area of the partitioned sections in the picture 201 of the selected component is displayed by being colored according to the magnitude of the value stored in the storing area 1222 for corrosion rate of the diagnosed result table 122, and a legend 41 showing the relationship between the color and the corrosion rate is displayed.

In a case where the amount of corrosion is selected as the data kind, the inquiring response means 92 forms an inquiring area 161 (shown in FIG.5) in the display screen 20 to receive an input of an instruction in regard to what time (how many years after the starting of operation) of the amount of corrosion is displayed through the area 161 of the input unit 2, and calculate the amount of corrosion at the instructed time, and then displays the value on the map.

FIG.5 shows an example of a numerical value display image in a case where the high level waste liquid condenser 97 is selected in step 102, and the map display is selected in step 104 or step 816, and the data kind is selected in step 104 or step 817, that is, the partitioned section is not selected, and the amount of corrosion is selected as the data kind, and "7" is input into the inquiring area 161.

In the map display image shown in FIG.5, each of the partitioned sections in the picture 201 of the selected component is displayed by the pre-determined color according to the ratio of the estimated amount of corrosion at the time seven years after starting of operation (or the amount of corrosion stored in the history table) to the corrosion allowance, and a legend 162 showing the relationship between the color and the corrosion rate is displayed.

Each of these map display images has a selecting area 215 for instructing displaying the detailed component display image. The inquiring response means 92 displays the numerical value display image until a touch to the selecting area 215 is detected. When the touch to the selecting area is detected, the inquiring response means 92 completes the processing in step 106 and returns the processing to step 103.

b-7. Graph display

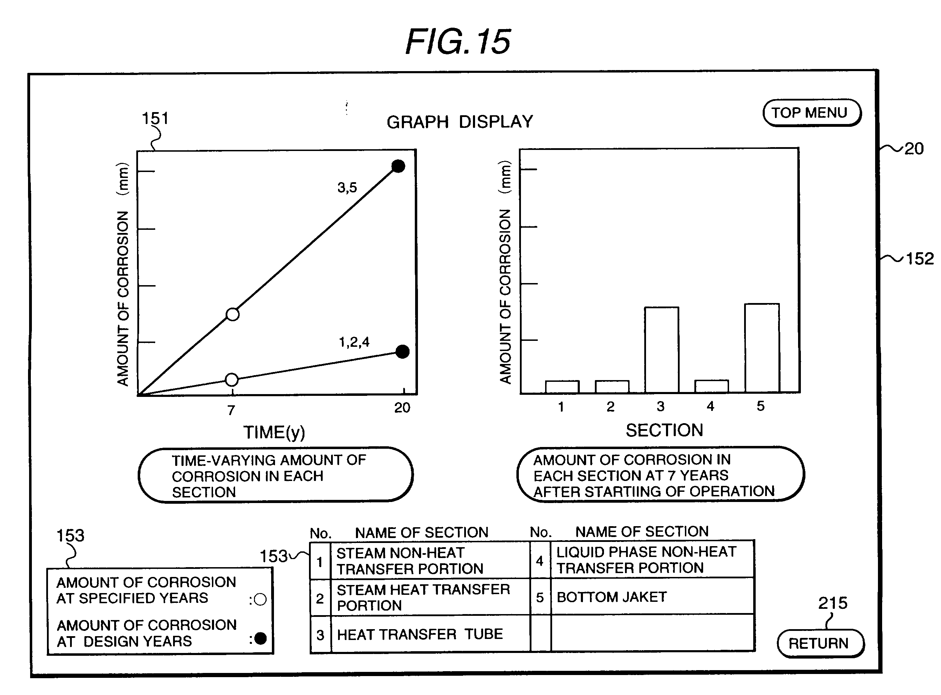

If the selection received in step 104, step 808 or step 816 is an instruction for displaying a graph step 820), the inquiring response means 92 displays the information in regard to a selected component or a partitioned section when the partitioned section is selected on the area 201 of the display screen 20 by a graph (step 821). FIG.15 shows an example of an image displayed in step 821.

In a case where the amount of corrosion is selected as the data kind, the inquiring response means 92 forms an inquiring area 161 (shown in FIG.5) in the display screen 20 to receive an input of an instruction in regard to what time (how many years after the starting of operation) of the amount of corrosion is displayed through the area 161 of the input unit 2, and calculate the amount of corrosion at the instructed time, and then displays the value on the map.

FIG.15 shows an example of a numerical value display image in a case where the high level waste liquid condenser 97 is selected in step 102, and the graph display is selected in step 104 or step 816, and the data kind is selected in step 104 or step 817, that is, the partitioned section is not selected, and the amount of corrosion is selected as the data kind, and "7" is input into the inquiring area 161.

The graph display image shown in FIG.15 has the graph 151 of time-varying amount of corrosion for each of the partitioned sections of the selected component and the graph 152 of the estimated amount of corrosion at the time seven years after starting of operation (or the amount of corrosion stored in the history table), and a legend 153 for discriminating the selected sections.

The graph display image has a selecting area 215 for instructing displaying the detailed component display image. The inquiring response means 92 displays the numerical value display image until a touch to the selecting area 215 is detected. When the touch to the selecting area is detected, the inquiring response means 92 completes the processing in step 106 and returns the processing to step 103.

D. Example of diagnosis

The following is an example of a material diagnosis of a high level waste liquid condenser using the diagnostic system of the embodiment. The liquid in the condenser is 8 mol/l nitric acid containing 5 g/l Fe ion, 5 mol/l $NO_{3-}$ ion, and the radiation dose is 1 M rad/hour. The material is type 304L stainless steel, and the effect of heat treatment, working, welding and surface treatment is 1.0, and the liquid temperature is 340 K. The correction value for operating mode is 1.0.

As the system is started, the process display image shown in FIG.2 is displayed as the initial image on the display screen 20. In this state, when a touch to the selecting area 209 of the high level waste liquid condenser is made, the detailed component display image shown in FIG.3 is displayed.

Next, when touches to the selecting area 203a for corrosion rate and the selecting area 204a for map display are made, the map display of corrosion rate shown in FIG.4 is displayed on the display screen 20. In the example shown here, since the upper portion of a heat transfer tube is illustrated by the darkest color, a user can easily understand that the heat transfer tube is corroded fastest.

When the selecting area 215 in this map display image is touched, the displayed picture is returned to the detailed component display image. Then when touches to the selecting area 203b for amount of corrosion and the selecting area 204a for map display are made, the inquiring area 161 is displayed on the display screen 20. Therein, by inputting "7" the map display of the amount of corrosion shown in FIG.5 is displayed on the display screen 20. The map display of FIG.5 displays what per cent to the designed corrosion allowance for a material the amount of corrosion at the time seven years after starting of the plant operation has been progressed by a picture using different colors. By doing so, the user can easily understand the degree of corrosion in the corrosion allowance.

By touching the selecting area 215 in this map display image, the displayed picture can be returned to the detailed component display image. After returning the displayed picture to the detailed component display image, when touches to the selecting area 203b for amount of corrosion and the selecting area 204a for graph display are made, the inquiring area 161 is displayed on the display screen 20. Therein, by inputting "7" the graph display of the amount of corrosion shown in FIG.15 is displayed on the display screen 20. By doing so, the user can easily understand how the amount of corrosion has been changed over time and how different the amount of corrosion is depending on the partitioned section.

In the detailed component display image, the numerical value display image is displayed on the display screen 20 by touching to the selecting area 203c for numerical value display. Since the status of corrosion and the total life time of material for each of the partitioned sections is displayed on the numerical value display image, it can be understood that the plant can be used for the design life time by keeping the operating condition as it is even if it is understood from the map display that the corrosion rate of the heat transfer tube is fast.

After touching to the selecting area 207 for partitioned section of the heat transfer tube in the detailed component display image, the corrosion status, the numerical value display image containing the total life time and the numerical values used for calculation is displayed by touching to the selecting area 203c for numerical value display. Therefore, the whole status can be understood.

E. Example of use of the diagnosed results

By using the diagnostic system according to the embodiment, an operating manager can determine the operating method of a plant based on the material diagnosed results output. For example, in a case there the corrosion rate exceeds an operating standard value (a maximum allowable value of corrosion rate required for attaining the design life time of a component), a measure to suppress the corrosion rate is employed by changing the operating method or the like. In this case, it is possible by using the diagnostic system to judge which mean is most proper. That is, it is possible to judge which factor among the factors to affect corrosion is preferable to be controlled. For example, it can be estimated how much the concentration of a specified chemical species should be decreased in order to suppress the corrosion. In a case where the corrosion rate becomes below the operating standard value by decreasing the concentration of the specified chemical species as the result, the measure to decrease the concentration of the chemical species is performed by some ways. In a case where it is expected that the amount of corrosion may exceed the designed corrosion allowance, the corrosion can be suppressed by the same manner.

F. Others

While in the embodiment of the diagnostic system the diagnosis of corrosion status of each of components is performed by specifying the components from the whole process, it may be possible to diagnose the whole process as a single unit. In this case, the diagnosed result may be displayed by each component as the same way as the aforementioned embodiment.

While the embodiment has been described in a case where the output of information is displayed on the display screen of the display unit 11, the embodiment of the diagnostic system can output the information as a printed matter from an output unit 12 when instruction of print output is instructed through the input unit.

[Embodiment 2]

The functional block of the embodiment 2 is the same as that of the embodiment 1. Although the diagnostic system in the embodiment 2 has nearly the same construction as the embodiment 1, the contents of processing executed by the plant monitoring means 91 and the inquiring response means 92 are different. Only the different points from the embodiment 1 will be described here.

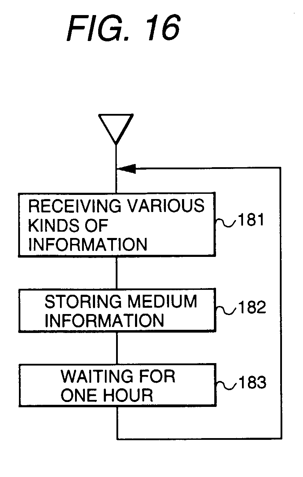

The plant monitoring means 91 of the embodiment 2 is a means which monitors the corrosion status of a plant as the diagnostic system in the embodiment 1 but does not output an alarm when detects a danger, and simply receives information and stores it to the memory means 93 periodically. FIG. 16 shows the process flow in the process monitoring means 91.

The plant monitoring means 91 of the embodiment 2 inquires the input units 2, 4, 6 of the material information 1, the operational information 3 and the medium information 5 (step 181) every certain period (ever one hour, in this embodiment) (step 183). The step 181 here is the same as the step 901 in the embodiment 1.

When the plant monitoring means 91 receives a notification of changing a value in the material information 1, the plant monitoring means 91 changes the data of the material information stored in the memory means 93 based on the notification. The plant monitoring means 91 stores the operational information 3 in the memory means 93. Further, the plant monitoring means 91 stores the medium information 5 notified into each of the areas 1212 to 1217, 1219 of the component status table 121 for each of the components according to the kind. Furthermore, the plant monitoring means 91 obtains a boiling temperature under atmospheric pressure form a nitric acid concentration, and stores it to a boiling temperature storing area 1218 (step 182). The step 182 here is the same as the step 902 in the embodiment 1.

Finally, the plant monitoring means 91 returns the processing to 181 after waiting for one hour (step 183). The step 183 here is the same as the step 903 in the embodiment 1.

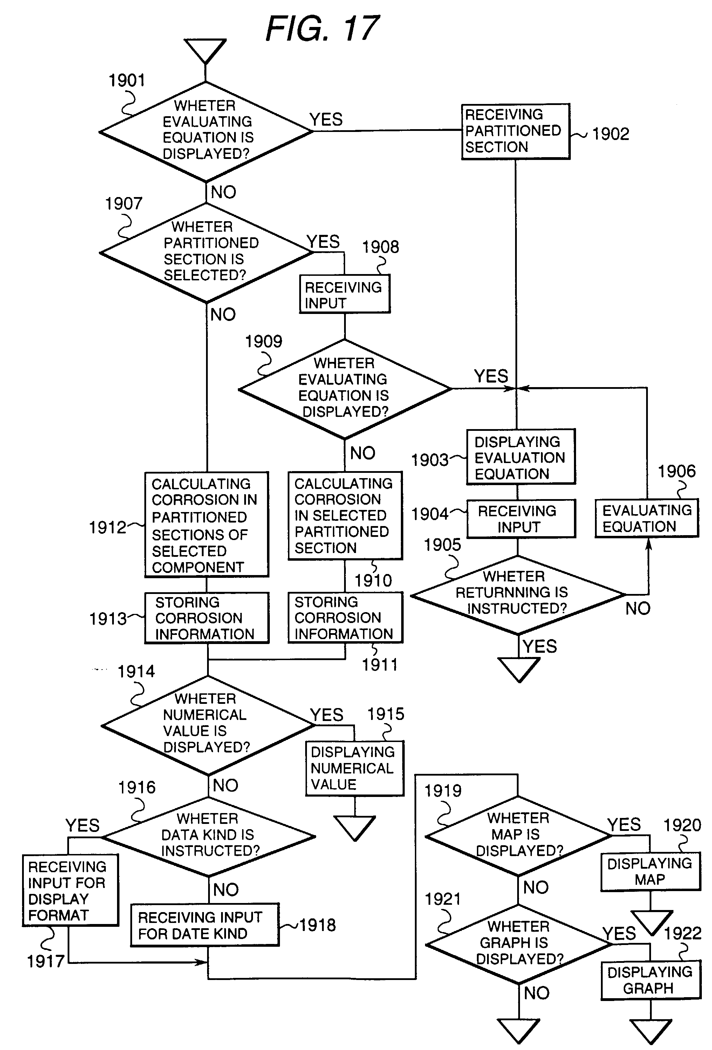

The inquiring response means 92 in the embodiment 2 executes the processes 101 to 106 as the same as the inquiring response means in the embodiment 1 does. However, in step 106, the inquiring response means 92 itself in the embodiment 2 executes the estimating process of corrosion rate and so on which is executed by the plant monitoring means 91 in the embodiment 1. FIG. 17 shows the process flow of step 106 in the embodiment 2.

In step 106, the inquiring response means 92 in the embodiment 2 executes the processes 101 to 106 as the same as the inquiring response means in the embodiment 1 does (step 1901 to 1906).

In step 1901, when a selection received in step 104 is not an instruction for displaying the evaluation equations, the inquiring response means 92 judges whether the selection is a selection for partition section or not (step 1907). If the selection is neither an instruction for displaying the evaluation equations nor a selection for partition section, the inquiring response means 92 let the processing proceed to step 1912. If the selection received in step 104 is a selection for partition section, the inquiring response means 92 again receives a selection for displayed content (step 1909) and lets the processing proceed to step 1903 after an instruction for displaying the evaluation equations is selected. If an instruction for displaying the evaluation equations is not selected, the inquiring response means 92 lets the processing proceed to step 1910 (step 1909).

In step 1910, the inquiring response means 92 again executes calculation of a corrosion rate, an amount of corrosion, an amount of corrosion at the design life time and a remaining life time for each of the partitioned sections selected (step 1910), and stores the result in each of the areas 1222 to 1224, 1226 of the diagnosed result table 122 (step 1911), and then lets the processing proceed to step 1914.

In step 1912, the inquiring response means 92 again executes calculation of a corrosion rate, an amount of corrosion, an amount of corrosion at the design life time and a remaining life time for each of all the partitioned sections composing components selected in step 102 (step 1912), and stores the result in each of the areas 1222 to 1224, 1226 of the diagnosed result table 122 (step 1913), and then lets the processing proceed to step 1914. The calculating process in steps 1910 and 1912 here is the same as the calculating process of the evaluation equations executed in step 902 in the embodiment 1.

After step 1914, the inquiring response means 92 executes processing for displaying instructed data in an instructed format on the display screen 20 in the same way as in the embodiment 1. The steps 1914 to 1922 here are the same as the steps 813 to 821 in the embodiment 1.

While in the embodiment 2 the plant monitoring means 91 is provided as a means for receiving information from each of the input units 2, 4, 6 and storing the information into the memory areas, it is possible that such a means for receiving inputs is not provided, but the inquiring response means 92 inquires each of the input units 2, 4, 6 of necessary information when calculation such as corrosion rate and so on is executed and stores the notified information in the memory areas of the memory means 93.

According to the corrosion diagnosing method and the corrosion diagnostic system in accordance with the present invention, since a corrosion status of a plant corroded by acid can be understood and predicted, a user can cope with the corrosion. Therefore, by using the corrosion diagnosing method and the corrosion diagnostic system in accordance with the present invention, the plant can be operated safely. The present invention is suitable for a spent nuclear fuel reprocessing plant to which safety is particularly required. According to the method of suppressing corrosion in accordance with the present invention, since the corrosion of structural material a contacting nitric acid solution in a spent nuclear fuel reprocessing plant can be effectively suppressed, the reprocessing plant can be operated safely.

## Claims

1. A corrosion rate estimating method of a plant structural material for estimating progress of corrosion in a structural material in contact with a solution containing an acid in a plant dealing with said solution containing the acid, wherein

    said corrosion rate is estimated by multiplying:
    a corrosion rate of the structural material contacting said acid solution in the boiling state under atmospheric pressure; a corrosion acceleration rate of a predetermined chemical species contained in said solution containing the acid; a predetermined welding work effect correction value;
    a temperature correction value; and
    a predetermined operating mode correction value; together.

2. A corrosion rate estimating method of a plant structural material according to claim 1, wherein

    said plant is a spent nuclear fuel reprocessing plant; and
    said solution containing the acid is a nitric acid solution containing a solved spent nuclear fuel.

3. A corrosion diagnostic system of a plant structural material for estimating progress of corrosion in a structural material in contact with a solution containing an acid in a plant dealing with said solution containing the acid, which comprises:

    an input unit, an output unit, and a processor;
    said input unit comprising:
    means for receiving an input on a concentration of a chemical species contained in said solution containing the acid;
    means for receiving an input on the operating status data;
    means for receiving an input on the temperature data of said solution containing the acid;
    means for receiving an input on the information in relation to said structural material;
    said processor comprising:

means for obtaining a corrosion rate of the structural material contacting said acid solution in the boiling state under atmospheric pressure from said concentration of a chemical species contained in said solution containing the acid;

means for estimating a corrosion rate of said structural material from the product of a corrosion rate of the structural material contacting said acid solution in the boiling state under atmospheric pressure, a correction value determined by the concentration of a predetermined chemical species contained in said solution containing the acid, a correction value determined by said operating status data, and a correction value determined by said temperature data; and

means for outputting at least one of said estimated corrosion rate and the information on progress of corrosion obtained by said corrosion rate to said output unit.

4. A corrosion diagnostic system of a plant structural material according to claim 3, wherein

said plant is a spent nuclear fuel reprocessing plant; and
said acid is nitric acid.

5. A corrosion diagnostic system of a plant structural material according to claim 3, wherein
said processor estimates said progress of corrosion every predetermined period, and comprises means for outputting an alarm to said output unit when a progress of corrosion exceeding a predetermined level.

6. A corrosion diagnostic system of a plant structural material according to claim 3, wherein
said information in relation to structural material includes the history of heat treatment, working, welding, surface treatment and the maintenance of said structural material.

7. A corrosion diagnostic system of a plant structural material according to claim 6, wherein
said information in relation to structural material further includes information in relation to the property of said structural material.

8. A corrosion diagnostic system of a plant structural material according to claim 3, wherein
said operating status data includes information in relation to periods and/or states of operation, suspension and storage for each component composing said plant.

9. A corrosion diagnostic system of a plant structural material according to claim 3, wherein
said predetermined chemical species is at least one of nitric acid, iron, ruthenium and nitric acid ion.

10. A corrosion diagnostic system of a plant structural material according to claim 3, wherein
said predetermined chemical species is at least one of nitric acid, iron, ruthenium, nitric acid ion and plutonium.

11. A corrosion diagnostic system of a plant structural material according to claim 3, further comprising:

an on-line measuring instrument which measures said concentration of the predetermined chemical species in the solution containing an acid and/or the temperature of the solution containing an acid and outputs the measuring result as a signal; and

means for receiving the signal of said concentration of the predetermined chemical species in the solution containing an acid and/or said temperature of the solution containing an acid which receives the signal output from said on-line measuring instrument as an input.

12. A corrosion diagnostic system of a plant structural material according to claim 4, wherein

said input unit further comprises means for receiving an input on radiation dose; and

said processor further comprises means for estimating a corrosion rate of said structural material from the product of a corrosion rate of the structural material contacting said acid solution in the boiling state under atmospheric pressure, a correction value determined by the concentration of a predetermined chemical species contained in said solution containing the acid, a correction value determined by said operating status data, a correction value determined by said temperature data and a correction value determined by said radiation dose.

**13.** A corrosion diagnostic system of a plant structural material according to claim 3, which further comprises:
   memory means for storing historical information of at least one of said estimated corrosion rate and the information on progress of corrosion obtained by said corrosion rate.

## FIG. 1

MATERIAL INFORMATION [1] → INPUT UNIT [2] →

OPERATIONAL INFORMATION [3] → INPUT UNIT [4] →

MEDIUM INFORMATION [5] → INPUT UNIT [6] →

PROCESSOR [9]
- PLANT MONITORING MEANS [91]
- INQUIRING RESPONSE MEANS [92]
- MEMORY MEANS [93]

→ DISPLAY UNIT [11]

MEMORY MEANS [93] → OUTPUT UNIT [12] → OUTPUT INFORMATION [13]

MEMORY [10]

EP 0 727 656 A1

## FIG. 2

EP 0 727 656 A1

## FIG. 3

**HIGH LEVEL WASTE LIQUID CONDENSER**

( TOP MENU )

207 — STEAM NON-HEAT TRANSFER PORTION

207 — STEAM HEAT TRANSFER PORTION

HEAT TRANSFER TUBE

207

207 — LIQUID PHASE NON-HEAT TRANSFER PORTION

207 — BOTTOM JACKET

| NAME | HEAT TRANSFER TUBE UPPER PORTION |
|---|---|
| NITRIC ACID (mol/l) | 8 |
| Fe (g/l) | 5 |
| NITRIC ACID ION (mol/l) | 5 |
| RADIATION DOSE (rad/h) | 1000000 |
| SURFACE TEMPERATURE (K) | 350 |
| BOILING TEMPERATURE UNDER ATMOSPHERIC PRESSURE(K) | 380 |
| LIQUID TEMPERATURE (K) | 340 |

○ CORROSION RATE — 203a

○ AMOUNT OF CORROSION — 203b

[ 19 ] YEAR — 161

○ MAP — 204a
○ GRAPH DISPLAY — 204b
○ NUMERICAL VALUE DISPLAY 1 — 204c
○ NUMERICAL VALUE DISPLAY 2 — 204d

CORROSION CALCULATION — 208

— 205

( EVALUATING EQUATION ) — 205

( RETURN ) — 215

206

204

201

202

20

203

EP 0 727 656 A1

## FIG. 4

41 / 201

### HIGH LEVEL WASTE LIQUID CONDENSER

( TOP MENU )

STEAM NON-HEAT TRANSFER PORTION

STEAM HEAT TRANSFER PORTION

HEAT TRANSFER TUBE

LIQUID PHASE NON-HEAT TRANSFER PORTION

BOTTOM JACKET

0.020
0.015
0.010
0.005
0.000
(mm/y)

| NAME | HEAT TRANSFER TUBE UPPER PORTION |
|---|---|
| NITRIC ACID (mol/l) | 8 |
| Fe (g/l) | 5 |
| NITRIC ACID ION (mol/l) | 5 |
| RADIATION DOSE (rad/h) | 1000000 |
| SURFACE TEMPERATURE (K) | 350 |
| BOILING TEMPERATURE UNDER ATMOSPHERIC PRESSURE(K) | 380 |
| LIQUID TEMPERATURE (K) | 340 |

◉ CORROSION RATE

○ AMOUNT OF CORROSION

◉ MAP
○ GRAPH DISPLAY
○ NUMERICAL VALUE DISPLAY 1
○ NUMERICAL VALUE DISPLAY 2

CORROSION CALCULATION

( EVALUATING EQUATION )

( RETURN )

20

215

EP 0 727 656 A1

# FIG. 5

HIGH LEVEL WASTE LIQUID CONDENSER — 162 / 201

TOP MENU

| NAME | HEAT TRANSFER TUBE UPPER PORTION |
|---|---|
| NITRIC ACID (mol/l) | 8 |
| Fe (g/l) | 5 |
| NITRIC ACID ION (mol/l) | 5 |
| RADIATION DOSE (rad/h) | 1000000 |
| SURFACE TEMPERATURE (K) | 350 |
| BOILING TEMPERATURE UNDER ATMOSPHERIC PRESSURE(K) | 380 |
| LIQUID TEMPERATURE (K) | 340 |

STEAM NON-HEAT TRANSFER PORTION

STEAM HEAT TRANSFER PORTION

HEAT TRANSFER TUBE

LIQUID PHASE NON-HEAT TRANSFER PORTION

BOTTOM JACKET

100%
70%

⦿ CORROSION RATE — 203a  } 203
○ AMOUNT OF CORROSION — 203b
7 YEAR — 161

⦿ MAP
○ GRAPH DISPLAY
○ NUMERICAL VALUE DISPLAY 1
○ NUMERICAL VALUE DISPLAY 2

CORROSION CALCULATION — 208

EVALUATING EQUATION — 205

RETURN — 215

204

20

FIG. 6

EP 0 727 656 A1

# FIG. 7

CPU ⌇111

MAIN MEMORY ⌇112

⌇9

PROCESSOR

# FIG. 8

801 WHETER EVALUATING EQUATION IS DISPLAYED? —YES→ RECEIVING PARTITIONED SECTION ~802

NO

807 WHETER PARTITIONED SECTION IS SELECTED? —YES→ 808 RECEIVING INPUT

NO

809 WHETER EVALUATING EQUATION IS DISPLAYED? —YES→

NO 803 DISPLAYING EVALUATION EQUATION

806 CORRECTING EVALUATING EQUATION AND CALCULATED RESULT

804 RECEIVING INPUT

811 WHETER CORROSION CALCULATION IS EXECUTED? —YES→ 812 EXECUTING CALCULATION

805 WHETER RETURNNING IS INSTRUCTED? —NO→

NO

YES

..813 WHETER NAMERICAL VALUE IS DISPLAYED? —YES→ 814 DISPLAYING NUMERICAL VALUE

NO

815 WHETER DATA KIND IS INSTRUCTED?

YES → 816 RECEIVING INPUT FOR DISPLAY FORMAT

NO RECEIVING INPUT FOR DATE KIND ~817

818 WHETER MAP IS DISPLAYED? —YES→ 819 DISPLAYING MAP

NO

820 WHETER GRAPH IS DISPLAYED? —YES→ 821 DISPLAYING GRAPH

NO

# FIG. 9

```
                    ▽
                    │
         ┌──────────────────────┐
         │  RECEIVING VARIOUS   │──901
         │     INFORMATION      │
         └──────────────────────┘
                    │
         ┌──────────────────────┐
         │  STORING RECEIVED    │──902
         │     INFORMATION      │
         └──────────────────────┘
                    │
         ┌──────────────────────┐
         │    CALCULATING       │──903
         │  CORROSION STATUS    │
         └──────────────────────┘
                    │
         ┌──────────────────────┐
         │     STORING          │──904
         │  CORROSION STATUS    │
         └──────────────────────┘
                    │
              ◇───────905
        NO  ╱ WHETHER ╲
       ◄───< CORROSION IS >
            ╲ TOO FAST? ╱
              ◇
               YES
         ┌──────────────────────┐
         │  DISPLAYING ALARM    │──906
         │     MESSAGE          │
         └──────────────────────┘
                    │
         ┌──────────────────────┐
         │  WAITING FOR 1 HOUR  │──907
         └──────────────────────┘
```

## FIG. 10

```
        ▽

DISPLAYING PROCESS        ~101
DISPLAY IMAGE

RECEIVING COMPONENT       ~102
TO BE DIAGNOSED

DISPLAYING DETAILED       ~103
COMPONENT
DISPLAY IMAGE

RECEIVING SELECTION       ~104
OF PROCESS TO BE
EXECUTED NEXT

WHETHER                   ~105
PROCESSING IS
RETERNED?

NO

EXECUTING SELECTED        ~106
PROCESS
```

# FIG.11

## EVALUATING EQUATIONS

CORROSION RATE = CORROSION RATE IN NITRIC ACID (BOILING TEMPERATURE UNDER ATMOSPHERIC PRESSURE) * COEXISTENT ION ACCELERATION RATE * WELDING EFFECT CORRECTION * TEMPERATURE CORRECTION * OPERATIONAL MODE CORRECTION  ~211

(TOP MENU) ~20

| | |
|---|---|
| CORROSION TEMPRATURE IN NITRIC ACID | $ka1 * X + Ka2 * X^2 - Ka3 * X^3 + Ka4 * X^4$ (X IS NITRIC ACID CONCENTRATION(mol/l)) |
| COEXISTENT ION ACCELERATION RATE | $1 + Kb1 * (Ru\ g/l) + Kb2 * (Fe\ g/l)$ |
| WELDING EFFECT CORRECTION | 1.0 |
| TEMPERATURE CORRECTION | SURFACE TEMPERATURE $= \exp(90E3/8.3\ (1/Tbp - 1/Tst))$<br><br>Tst : ABSOLUTE SURFACE TEMPERATURE(K)  Tbp : BOLDING TEMPERATURE UNDER ATMOSPHERIC PRESSURE(K) (FOR THE ABOVE NITRIC ACID CONCENTRATION) |
| OPERATIONAL MODE CORRECTION | 1.0 |

212

### CONSTANT FOR CORRECTION TERM

| | HIGH LEVEL WASTE LIQUID CONDENSOR | ACID RICOVERING EVAPORATOR | LOW LEVEL WASTE LIQUID EVAPORATIOR |
|---|---|---|---|
| WELDING EFFECT CORRECTION | 1.0 | 1.0 | 1.0 |
| OPERATIONAL MODE CORRECTION | 0.5 | 1.0 | 1.0 |

213

### TABLE OF CONSTANTS

| | |
|---|---|
| Ka1 | 6E-4 |
| Ka2 | 3E-4 |
| Ka3 | 4E-5 |
| Ka4 | 6E-6 |
| Kb1 | 1.5E 0 |
| Kb2 | 1E 0 |
| Kc1 | 2E 0 |
| Kc2 | 5E-1 |
| Kc3 | 4E-6 |

215

(RETURN)

214

EP 0 727 656 A1

FIG.12

EP 0 727 656 A1

| NAME OF COMPONENT | ADDRESS OF COMPONENT STATUS TABLE | ADDRESS OF DIAGNOSED RESULT TABLE |
|---|---|---|
| DISSOLVING TANK | | |
| IODINE EXPELLING TANK | | |
| CLARIFIER | | |
| HIGH LEVEL WASTE LIQUID CONDENSER | | |
| ACID RECOVERING EVAPORATOR | | |
| LOW LEVEL WASTE LIQUID EVAPORATOR | | |

120
1201
1202
1203

| NAME OF PARTITIONED SPECTION | CORROSION RATE | AMOUNT OF CORRSION | AMOUNT OF CORROSION AT DESIGN LIFE TIME | CORROSION ALLOWANCE | REMAINING LIFE TIME |
|---|---|---|---|---|---|
| STEAM NON-HEAT TRANSFER PORTION | 0.010 | 0.05 | 0.10 | — | >100 |
| STEAM HEAT TRANSFER PORTION | 0.010 | 0.05 | 0.10 | — | >100 |
| HEAT TRANSFER TUBE | 0.016 | 0.11 | 0.35 | — | 50 |
| LIQUID PHASE NON-HEAT TRANSFER PORTION | 0.010 | 0.05 | 0.10 | — | >100 |
| BOTTOM JAKET | 0.016 | 0.11 | 0.35 | — | 50 |

122
1221  1222  1223  1224  1225  1226

| NAME OF PARTITIONED SECTION | NITRIC ACID CONCENTRATION | Fe CONCENTRATION | Ru CONCENTRATION | No3 CONCENTRATION | RADIATION DOSE | SURFACE TEMPERATURE | BOILING TEMPERATURE | LIQUID TEMPERATURE |
|---|---|---|---|---|---|---|---|---|
| STEAM NON-HEAT TRANSFER PORTION | | | | | | | | |
| STEAM HEAT TRANSFER PORTION | | | | | | | | |
| HEAT TRANSFER TUBE | 8 | 5 | — | 5 | 1000000 | 350 | 380 | 340 |
| LIQUID PHASE NON-HEAT TRANSFER PORTION | | | | | | | | |
| BOTTOM JAKET | | | | | | | | |

121
1211  1212  1213  1214  1215  1216  1217  1218  1219

PLANT OPERATING PERIOD 123

DESIGN LIFE TIME 124

# FIG.13

EP 0 727 656 A1

(EVALUATED RESULT)    (HIGH LEVEL WASTE LIQUID CONDENSING — HIGH LEVEL WASTE LIQUID CONDENSER)

~20

| NAME OF SECTION | EVALUATED CORROSION RATE(mm/y) | EVALUATED AMOUNT OF CORROSION (mm) (AT EVALUATING TIME) | EXTRA PORATED AMOUNT OF CORROSION (mm) (AT DESIGN LIFE TIME) | CORROSION ALLOWANCE (mm) | REMAINING LIFE TIME (y) |
|---|---|---|---|---|---|
| STEAM NON-HEAT TRANSFER PORTION | 0.010 | 0.05 ( 7 / (y) ) | 0.10 ( 20 / (y) ) | — | >100 |
| STEAM HEAT TRANSFER PORTION | 0.010 | 0.05 ( 7 / (y) ) | 0.10 ( 20 / (y) ) | — | >100 |
| HEAT TRANSFER TUBE | 0.016 | 0.11 ( 7 / (y) ) | 0.35 ( 20 / (y) ) | — | 50 |
| LIQUID PHASE NON-HEAT TRANSFER PORTION | 0.010 | 0.05 ( 7 / (y) ) | 0.10 ( 20 / (y) ) | — | >100 |
| BOTTOM JAKET | 0.016 | 0.11 ( 7 / (y) ) | 0.35 ( 20 / (y) ) | — | 50 |

⇨

215

(RETURN)

# FIG.14

HIGH LEVEL WASTE LIQUID CONDENSING — HIGH LEVEL WASTE LIQUID CONDENSER — HEAT TRANSFER TUBE

TOP MENU

~20

**EVALUATED RESULT**

| EVALUATED CORROSION SPEED(mm/y) | EVALUATED AMOUNT OF CORROSION (mm) (AT EVALUATING TIME) | EXTRA PORATED AMOUNT OF CORROSION (AT DESIGN LIFE TIME) | CORROSION ALLOWANCE (mm) | REMAINING LIFE TIME (y) |
|---|---|---|---|---|
| 0.016 | 0.11 ( 7 / (y) ) | 0.35 ( 20 / (y) ) | — | 50 |

**BASIC CORROSION EBALUATING CONDITION**    **COEXISTENT ION EFFECT CORRECTION**

| NITRIC ACID CONCENTRATION (md/l) | BASIC EVALUATED CORROSION RATE (mm/y) (NITRIC ACID BOILING TEMPERATURE UNDER ATMOSPHERIC PRESSURE) | Fe (g/l) | Ru (md/l) | NITRICACID ION (mol/l) | RADIATION DOSE (radl/h) | COEXISTENT ION ACCELERATING RATE |
|---|---|---|---|---|---|---|
| 8 | 0.03 ( 380 / (K) ) | 5 | — | 5 | 1000000 | 17.5 |

**TEMPERATURE CORRECTION**

| SURFACE TEMPERATURE (K) | LIQUID TEMPERATURE (K) | NITRIC ACID BOILING TEMPERATURE UNDER ATMOSPHERIC PRESSURE (K) | ACTIVATION ENERGY (kJ/mol) | ENVIRONMENTAL PRESSURE (Torr) | TEMPERATURE CORRECTING COEFFICIENT |
|---|---|---|---|---|---|
| 350 | 340 | 380 | 90 | 90 | 0.06 |

**OTHER CORRECTION**

| WELDING EFFECT CORRECTING COEFFICIENT | OPERATIONAL MODE CORRECTING COEFFICIENT | OPERATING RATE |
|---|---|---|
| 1.0 | 0.5 | 1.0 |

215

RETURN

# FIG.15

GRAPH DISPLAY

(TOP MENU)

151

TIME-VARYING AMOUNT OF CORROSION IN EACH SECTION

AMOUNT OF CORROSION IN EACH SECTION AT 7 YEARS AFTER STARTIING OF OPERATION

153

AMOUNT OF CORROSION AT SPECIFIED YEARS :○

AMOUNT OF CORROSION AT DESIGN YEARS :●

| No. | NAME OF SECTION | No. | NAME OF SECTION |
|-----|-----------------|-----|-----------------|
| 1 | STEAM NON-HEAT TRANSFER PORTION | 4 | LIQUID PHASE NON-HEAT TRANSFER PORTION |
| 2 | STEAM HEAT TRANSFER PORTION | 5 | BOTTOM JAKET |
| 3 | HEAT TRANSFER TUBE | | |

153

215

(RETURN)

EP 0 727 656 A1

# FIG. 16

```
        ▽
        │←──────────────┐
  ┌──────────────────┐  │
  │ RECEIVING VARIOUS│  │
  │ KINDS OF         │∿181
  │ INFORMATION      │  │
  └──────────────────┘  │
        │               │
  ┌──────────────────┐  │
  │ STORING MEDIUM   │∿182
  │ INFORMATION      │  │
  └──────────────────┘  │
        │               │
  ┌──────────────────┐  │
  │ WAITING FOR      │∿183
  │ ONE HOUR         │  │
  └──────────────────┘  │
        │               │
        └───────────────┘
```

## FIG. 17

1901 — WHETER EVALUATING EQUATION IS DISPLAYED? — **YES** → RECEIVING PARTITIONED SECTION — 1902

**NO**

1907 — WHETER PARTITIONED SECTION IS SELECTED? — **YES** → 1908 RECEIVING INPUT

**NO**

1909 — WHETER EVALUATING EQUATION IS DISPLAYED? — **YES**

**NO**

1903 — DISPLAYING EVALUATION EQUATION

1904 — RECEIVING INPUT

1906 — EVALUATING EQUATION

1905 — WHETER RETURNNING IS INSTRUCTED? — **NO**

**YES**

1912 — CALCULATING CORROSION IN PARTITIONED SECTIONS OF SELECTED COMPONENT

CALCULATING CORROSION IN SELECTED PARTITIONED SECTION

1913 — STORING CORROSION INFORMATION

1910 — STORING CORROSION INFORMATION — 1911

1914 — WHETER NUMERICAL VALUE IS DISPLAYED? — **YES** → 1915 DISPLAYING NUMERICAL VALUE

**NO**

1916 — WHETER DATA KIND IS INSTRUCTED? — **YES** → RECEIVING INPUT FOR DISPLAY FORMAT — 1917

**NO**

RECEIVING INPUT FOR DATE KIND — 1918

1919 — WHETER MAP IS DISPLAYED? — **YES** → 1920 DISPLAYING MAP

**NO**

1921 — WHETER GRAPH IS DISPLAYED? — **YES** → 1922 DISPLAYING GRAPH

**NO**

| | European Patent Office | EUROPEAN SEARCH REPORT | Application Number EP 96 30 0999 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | RECOD 91,<br>vol. 2, 1991,<br>pages 558-563, XP002002510<br>T.HONDA ET AL.: "Corrosion Behavior of Stainless Steel with Heat Transfer in Nitric Acid Solutions under Reduced Pressure Environments"<br>* abstract; figure 1 *<br>--- | 1 | G01N17/00 |
| A | EP-A-0 442 205 (WESTINGHOUSE ELECTRIC CORPORATION)<br>* abstract *<br>* column 2, line 36 - line 43; figure 1 *<br>--- | 1,2 | |
| A | EP-A-0 358 994 (WESTINGHOUSE ELECTRIC CORPORATION)<br>* abstract; figure 1 *<br>----- | 1-3 | |
| | | | TECHNICAL FIELDS SEARCHED (Int.Cl.6)<br><br>G01N |

The present search report has been drawn up for all claims

| Place of search | Date of completion of the search | Examiner |
|---|---|---|
| THE HAGUE | 8 May 1996 | Kempf, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)